(19) Europäisches Patentamt
European Patent Office
Office européen des brevets

(11) **EP 4 461 497 A1**

(12) **EUROPEAN PATENT APPLICATION**

(43) Date of publication:
**13.11.2024 Bulletin 2024/46**

(21) Application number: **23172129.1**

(22) Date of filing: **08.05.2023**

(51) International Patent Classification (IPC):
**B29B 17/02** $^{(2006.01)}$    **B29B 17/04** $^{(2006.01)}$
**B29K 27/00** $^{(2006.01)}$    **B29K 27/06** $^{(2006.01)}$

(52) Cooperative Patent Classification (CPC):
**B29B 17/02;** B29B 17/0412; B29B 2017/0231;
B29B 2017/0244; B29K 2027/00; B29K 2027/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Vynova Holding S.A.
1313 Luxembourg (LU)**

(72) Inventors:
- **COLEMONTS, Christel
  3980 Tessenderlo (BE)**
- **LASUYE, Thierry
  62670 Mazingarbe (FR)**

(74) Representative: **Herzog IP Patentanwalts GmbH
Steinstraße 16-18
40212 Düsseldorf (DE)**

(54) **RECOVERY OF PVC FROM WASTE USING DOUBLE GRAVITY SEPARATION**

(57) Process of making a vinyl halide polymer from plastic waste comprising at least 10 wt.% of the vinyl halide polymer, comprising at least the steps: a) forming a slurry of a first aqueous phase with a density D1 and a feed composition comprising the vinyl halide polymer; b) dividing the slurry into a first intermediate phase and a second intermediate phase, the first intermediate phase having a higher content of particles comprising the vinyl halide polymer than the second intermediate phase; c) forming a suspension of the first intermediate phase and a second aqueous phase with a density D2; d) dividing the suspension into a third aqueous phase and a fourth aqueous phase, the third aqueous phase having a higher content of particles comprising the vinyl halide polymer than the fourth aqueous phase; wherein the vinyl halide polymer has a density DP and one of the following applies: A) $D1 \leq DP-x$ and $D2 \geq DP+y$; or B) $D1 \geq DP+y$ and $D2 \leq DP-x$; always with x, y>=0.05.

Fig. 4

EP 4 461 497 A1

## Description

The invention relates to a process of making a vinyl halide polymer comprising at least these steps: i) Providing a feed composition comprising particles of a plastic composition, the plastic composition comprising at least 10 wt.% of the vinyl halide polymer; a first aqueous phase with a density D1 comprising water and at least one salt S1, the salt S1 being dissolved in the water at least partially; a second aqueous phase with a density D2 comprising water and at least one salt S2, the salt S2 being dissolved in the water at least partially; ii) Forming a slurry of the first aqueous phase and the feed composition; iii) Dividing the slurry into a first intermediate phase and a second intermediate phase, the first intermediate phase having a higher content of particles of the plastic composition comprising the vinyl halide polymer than the second intermediate phase; iv) Forming a suspension of the first intermediate phase and the second aqueous phase; v) Dividing the suspension into a third aqueous phase and a fourth aqueous phase, the third aqueous phase having a higher content of particles of the plastic composition comprising the vinyl halide polymer than the fourth aqueous phase; wherein the plastic composition comprising the vinyl halide polymer has a density DP; wherein one condition selected from the following applies: A) $D1 \leq |DP-x|$ and $D2 \geq |DP+y|$ and each x, y independent from each other $\geq 0.05$; or B) $D1 \geq |DP+y|$ and $D2 \leq |DP-x|$ and each x, y independent from each other $\geq 0.05$.

The invention further relates to a vinyl halide polymer obtainable by the above process, an article comprising the vinyl halide polymer and uses of the vinyl halide polymer and of double gravity separation of vinyl halide polymer to enhance the purity of the vinyl halide polymer.

## Background of the invention

Vinyl halide polymers such as poly vinyl chloride (PVC) are widely used for the manufacture of a variety of articles. They are used, for example, for the manufacture of sheets - generally reinforced with reinforcing fibers - intended for covering soils, for covering vehicles (trucks), for the concealing of buildings on which work is being carried out, for the construction of sets for entertainments or exhibitions, or for advertising purposes. Furthermore, in many applications, their lifetime is short, typically a few weeks or months. For these reasons, large quantities of PVC are scrapped each year. The process of recycling them consequently constitutes a major ecological and economic problem.

The same situation applies with regard to other articles based on one or more, flexible or rigid, vinyl halide polymers (preferably PVC) for example with regard to conveyor belts, coated fabrics and other elements for the interior furnishing of vehicles, pipes and hoses, window frames or polymer-insulated power cables.

Thorough grinding of these articles usually results in a mixture of fine particles of heterogeneous composition, which is difficult to purify and reuse. Furthermore, in the case of fiber-reinforced articles (for example, polyester or nylon-fiber-reinforced articles), the fibers often form a kind of wadding which makes it much more complicated to reuse the ground particles.

Various processes based on dissolving, using organic solvents, have already been proposed; however, they often cause safety and pollution problems.

Solvay aimed at solving that problem and developed the so-called Vinyloop process. This process is simple, economic and reliable, and does not produce much pollution. Further, it allows plastics of high purity and advantageous morphology to be recovered, while substantially preventing any additives from being extracted therefrom. This process includes the dissolution of the polymer in an adequate solvent capable of dissolving it and susceptible of forming an azeotrope with water, and its precipitation by injecting steam in the solution thus obtained, which moreover leads to the stripping of the water-solvent azeotrope and so leaves behind a mixture essentially consisting of water and of solid polymer particles which are recovered, while the vapors resulting from the stripping are condensed and decanted so as to recover both a solvent phase for a subsequent dissolution and a "water" phase for a subsequent precipitation. This process to recycled PVC had a primary energy demand which is 46 % lower and the use of water about 76 % less than for conventional produced PVC. However, the process had no way to remove low molecular weight additives such as phthalates during recycling, and tightened EU regulations led to a halt of industrial usage of this process.

There are other process developments which aim to increase efficiency of the recycling of PVC and to remove additives in a cost-effective way. However, all these processes still have their disadvantages.

## Objectives

It is an object of the present invention to overcome, at least in part, one or more of the disadvantages resulting from the prior art.

Another object of the invention is to recycle waste PVC and/or PVC plastic compositions for a second lifecycle.

Another object of the invention is to provide a method to treat waste PVC and/or PVC plastic compositions in order to make it a raw material for a second lifecycle.

It is an object of the invention to provide a method to treat waste PVC and/or PVC plastic compositions in order to make it a raw material for a second lifecycle thereby preserving the properties from the previous application.

It is an object of the invention to provide a method to treat waste PVC and/or PVC plastic compositions in order to make it a raw material for a second lifecycle as a high-quality product.

It is an object of the invention to provide a method to treat waste PVC and/or PVC plastic compositions in order to make it a raw material for the same use as before.

It is an object of the invention to use waste PVC and/or PVC plastic compositions from construction and to prepare a raw material for the manufacture of articles used in construction.

It is an object of the invention to provide a method to recycle PVC and/or PVC plastic compositions with less energy consumption than known recycling processes.

It is an object of the invention to provide a method to recycle PVC and/or PVC plastic compositions at room temperature or slightly elevated temperature.

It is an object of the invention to provide a method to separate PVC and/or PVC plastic compositions from other materials, such as other plastics, highly filled plastics, crosslinked plastics and non-plastic materials at room temperature or slightly elevated temperature.

It is an object of the invention to provide a method to separate waste PVC and/or PVC plastic compositions into unplasticized PVC and PVC plastic compositions, plasticized PVC and PVC plastic compositions, and other waste.

It is an object of the invention to provide a method to separate waste PVC and/or PVC plastic compositions from highly filled plastics at room temperature or slightly elevated temperature.

It is an object of the invention to provide a method to recycle PVC and/or PVC plastic compositions to a raw material for a second lifecycle without heating.

It is an object of the invention to provide a method to recycle PVC and/or PVC plastic compositions to a raw material for a second lifecycle substantially without using any organic solvents.

It is an object of the invention to provide a method to recycle PVC and/or PVC plastic compositions to a raw material for a second lifecycle substantially without swelling or dissolving the PVC.

It is an object of the invention to provide a method to separate unplasticized PVC and/or plastic composition of unplasticized PVC from other materials, such as other plastics, highly filled plastics, crosslinked and highly filled plastics and non-plastic materials, such as glass, metals, mud without heating.

It is an object of the invention to separate waste PVC and/or PVC plastic compositions parts from other parts of at least slightly different density in an effective manner.

It is another object of the invention to separate waste PVC and/or PVC plastic compositions parts from other parts of at least slightly different density in an effective manner without removing any additives from the PVC, and the PVC plastic composition respectively.

It is another object of the invention to separate waste PVC plastic parts from other parts of at least slightly different density in an effective manner and to remove additives from the PVC plastic.

Another object of the invention is to recover or recycle unplasticized PVC and/or PVC plastic compositions from waste PVC comprising plasticized PVC.

It is another object of the invention to prepare recycled PVC and/or PVC plastic compositions in high purity.

It is another object of the invention to prepare recycled PVC and/or PVC plastic compositions in high purity but preserving additives present in the PVC and/or PVC plastic compositions respectively.

It is another object of the invention to prepare recycled PVC and/or PVC plastic compositions in high purity free of other plastic or inorganic components and free of any additives to the PVC.

It is an object of the invention to provide a method to recycle PVC and/or PVC plastic compositions avoiding organic solvents as much as possible.

It is an object of the invention to use waste PVC and/or PVC plastic compositions from construction and to prepare a raw material for the manufacture of articles used in construction without depletion of the additives from the PVC and/or PVC plastic composition respectively.

It is an object of the invention to use waste PVC and/or PVC plastic compositions from construction and to prepare a raw material for the manufacture of articles used in construction thereby preserving the additives from the waste PVC and/or PVC plastic composition respectively.

Another object of the invention is to avoid the generation of hazardous waste when recycling PVC and/or PVC plastic compositions from waste PVC plastic compositions for a second lifecycle.

Another object of the invention is to avoid the generation of hazardous waste, such as organic and inorganic lead compounds, and/or phthalates, when recycling PVC and/or PVC plastic compositions from waste PVC plastic compositions for a second lifecycle.

An object of the invention is to employ less organic volatile organic compounds, such as solvents, than in known processes of PVC recycling.

An object of the invention is to reduce a risk of environmental damages than in known processes of PVC recycling.

An object of the invention is to use aqueous phases in the process of recycling of PVC and/or PVC plastic compositions.

An object of the invention is to provide a process of recycling waste PVC and/or PVC plastic compositions for a second lifecycle in construction materials, whereby no addition of pigments is necessary.

Another object is to provide articles of recycled PVC and/or recycled PVC plastic compositions which have the same or at least comparable properties compared with the same article made from mechanically recycled PVC plastic compositions, virgin PVC and/or virgin PVC plastic compositions.

Another object of the invention is to provide a method of the manufacture of articles from recycled PVC and/or recycled PVC plastic compositions, where an addition of additives can be avoided.

Another object of the invention is to provide a method of the manufacture of articles from recycled PVC and/or recycled PVC plastic compositions, where additives from the first use can be further used.

Another object is to provide articles of recycled PVC and/or recycled PVC plastic compositions, which have the same or at least comparable properties compared with the same article made from mechanically recycled PVC plastic compositions, virgin PVC and/or virgin PVC plastic compositions.

Another object is to recycle waste PVC and/or PVC plastic compositions for a second lifecycle whereby legacy additives, such as lead compounds and/or phthalates are removed from the PVC and/or PVC plastic compositions in order to obtain a recycled PVC and/or recycled PVC plastic compositions free of these additives.

## General

In the description, range specifications also include the values mentioned as limits. A specification of the type "in the range from X to Y" with respect to a quantity A consequently means that A can assume the values X, Y and values between X and Y. One-sided limited ranges of the kind "up to Y" for a size A mean accordingly as values Y and smaller than Y.

All numeric values and ranges mentioned in this description are meant to be "about" the value or range. The term "about" means that the value or range needs not to be met with absolute accuracy. "About" means that the numerical value or range can be hit exactly, but further includes a range of about +/- 2 %, based on the referenced value or endpoints of ranges. "About" also includes the exact values as a preferred embodiment. For example, a range mentioned to be from 20 to 80 could have its one end between 19.96 and 20.04, with the exact value of 20.00 being preferred Similarly on the other end, it can mean any value between 78.4 and 81.6, with the exact value of 80.0 being preferred. Accordingly, this range could go from 19.96 to 81.6, or from 19.96 to 78.4, and so forth.

## Definitions

1 Dalton (1 Da) is a unit of mass equal to 1 g/mol, and a 1 kDa equals to 1 kg/mol and 1'000 g/mol. 1 MDa is 1'000'000 Da or 1'000'000 g/mol.

1 Å, or 1 Ångström is a unit of length equal to 0.1 nm, or $10^{-10}$ m.

The molecular weight cut-off (MWCO) of a membrane gives the molecular weight of a dissolved polymer, at which 90 % of the amount of the dissolved polymer is retained by the membrane. For commercial membranes, the MWCO is determined by testing polystyrene dissolved in THF when referring to organic solvents, or Dextran dissolved in water for the aqueous systems.

For example, a sample of a polystyrene with a broad and homogeneous molecular weight distribution is dissolved in THF giving a sample solution. The sample solution is subjected to a membrane filtration. Both, the sample solution and the permeate which has passed the membrane are characterized using GPC (gel permeation chromatography) with a refractive index detector. This GPC was calibrated with narrow-PDI polystyrene standard model polymers running THF as solvent. The MWCO is determined by identifying the point at which 90% of the dissolved polymer has passed the membrane. Usually, the MWCO is given by the supplier as part of the technical properties of commercial membranes.

The term "has less lead" refers to the presence of lead in elemental form, as an ion, complexed and in any other form. Usually, it is present as an ion of a lead salt or lead containing additive.

Terms like "up" and "low", "top" and "bottom", "upper" and "lower" indicate relative position with regard to an item or within an item or volume. The meaning of these terms always characterized the relative position based on the gravity vector, i.e. items located "up", "upper" and "top" are located or move relatively in direction in the opposite of to the gravity vector, while items located "bottom", "lower" or "down" are located or move relatively in direction of the gravity vector.

Room temperature is defined as 20 °C. Densities of solvents and other temperature dependent parameters are given for 20 °C, if not mentioned otherwise.

The term "Cn" indicates an organic compound, with n being the number of carbon atoms in the molecule. That is C6 indicates a molecule having 6 carbon atoms.

A parameter or formula embraced by |...| indicates that the value of the parameter or formula is always $\geq 0$. Regarding density values this is included solely for the purpose of clarification, since a density of a liquid cannot be negative, in general.

**Summary of the invention**

An aim of the invention is to provide a way of separating and recycling of e.g., unplasticized PVC plastic compositions, also called rigid PVC, or other vinyl halide polymer containing plastic compositions found in a stream of waste from deconstruction of buildings and the like, which is eco-friendly and energy-efficient. Such a waste stream comprises relevant amounts of PVC, but also soft PVC, other polymers, mineral and metal waste, paper, carton and wood. It is also desired to separate the unplasticized PVC from plasticized, also called soft PVC. Moreover, it would be appreciated to conduct this process at room temperature, or slightly above at a moderate temperature. Contamination of recycled PVC (also referred-to as: rPVC) with soft PVC and/or plasticizer would likely prevent the rPVC from a second use as rigid PVC in construction of buildings, like window frames, doors, pipes, shutters etc. A challenge to separation different PVC qualities is their somewhat close-by densities, and similarity in other physical properties. Pure PVC has a density of 1.38 g/cm$^3$. Soft, plasticized PVC seals has usually a density of about 1.2 to 1.3 g/cm$^3$ depending on the type and amount of plasticizer and filler. On the other hand, rigid PVC has a higher density since it often comprises fillers and or pigments. So, its density is usually more than 1.4, such as about 1.45 g/cm$^3$, i.e., 1.4 - 1.5 g/cm$^3$. Another challenge is to separate rigid PVC from other, high density materials in the waste stream, for example glass, metal, crosslinked and highly filled polymers etc.

**Embodiments of the invention**

A contribution to the at least partial achievement of at least one of the aforementioned objectives and the aim is made by any of the aspects and embodiments of the invention.

|1| A process of making a plastic composition comprising a vinyl halide polymer comprising at least these steps:

i) Providing

a feed composition comprising particles of a plastic composition,
wherein the plastic composition comprises at least 10 wt.% of the vinyl halide polymer and one or more additives; and
a first aqueous phase comprising water and at least one salt *S1*;

wherein the salt *S1* is dissolved in the water at least partially;
wherein the first aqueous phase has a density *D1*;

a second aqueous phase comprising water and at least one salt *S2*,

wherein the salt *S2* is dissolved in the water at least partially;
wherein the second aqueous phase has a density *D2*,

ii) Forming a slurry of the first aqueous phase and the feed composition;
iii) Dividing the slurry into a first intermediate phase and a second intermediate phase,
wherein the first intermediate phase has a higher content of particles of the plastic composition comprising the vinyl halide polymer than the second intermediate phase;
iv) Forming a suspension of the first intermediate phase and the second aqueous phase;
v) Dividing the suspension into a third aqueous phase and a fourth aqueous phase,

wherein the third aqueous phase has a higher content of particles of the plastic composition comprising the vinyl halide polymer than the fourth aqueous phase;
wherein the plastic composition comprising the vinyl halide polymer has a density *DP*;
wherein one condition selected from the following applies:

A) $D1 \leq |DP\text{-}x|$ and $D2 \geq |DP\text{+}y|$ and each x, y independent from the other $\geq 0.05$; or

B) $D1 \geq |DP\text{+}y|$ and $D2$ is $\leq |DP\text{-}x|$ and each x, y independent from the other $\geq 0.05$.

|2| The process of embodiment |1|, further comprising at least one of the steps of:

vi) Removing at least some water from the third aqueous phase to recover the particles of the plastic composition comprising the vinyl halide polymer; and/or

vii) optionally washing the particles of the plastic composition comprising the vinyl halide polymer.

|3| The process of any of the preceding claims, wherein the concentration of plastic composition comprising a vinyl halide polymer in the third aqueous phase is higher than the concentration of plastic composition comprising a vinyl halide polymer in the feed composition.

|4| The process of any of the preceding claims, wherein at least one of the steps i) - v) is performed at a temperature in the range from 1 to 120 °C.

|5| The process of any of the preceding claims, wherein the salt **S1** and **S2** can be same or different.

|6| The process of any one of the preceding embodiments, wherein the providing of the feed composition of step i) comprises reducing the size of pieces of the plastic composition to particles, wherein at least 75 % of the particles have a size of 5 cm or less, based on the total number of the particles.

171 The process of embodiment |6|, wherein the grinding is made by at least one of the techniques selected from universal milling, roller milling, cut milling, single shaft shredder, pulverizer and crusher machine.

|8| The process of any one of the preceding claims, wherein the forming in step ii) and/or step iv) is characterized by at least one of these features:

(a) a temperature of both, the plastic composition and the first aqueous phase, in the range from 1 °C to 120 °C;

(b) a contacting time in the range from 1 to 120 minutes;

(c) agitation during the forming

(d) addition of further salt or water to adjust the density of the first and/or second aqueous phase to the desired value;

or a combination of any two or more of the above.

|9| The process of any one of the preceding claims, wherein dividing in step iii) and/or step v) is performed using a technique selected from one of these: centrifugation, decantation, rotating decantation, flotation and hydrocycloning.

|10| The process of any one of the preceding claims comprising at least a further step, in which at least a part of the additives is removed from the particles of the plastic composition.

|11| The process of any one of the preceding embodiments, further comprising these steps:

viii) providing a liquid organic phase, wherein the liquid organic phase comprises at least one organic solvent;

ix) forming a base composition of

[i] the liquid organic phase and

[ii] the third aqueous phase obtained in step v) or the particles of the plastic composition comprising vinyl halide polymer obtained from step vi);

x) Dividing the base composition into a first composition and a second composition;

wherein the first composition has a higher content of additives than the second composition; and

wherein the second composition has a higher content of the vinyl halide polymer than the first composition.

|12| The process of any one of the preceding embodiments, wherein the at least one organic solvent of the liquid organic phase is selected from the group consisting of ketones, ethers, esters, aromatics, halogenated solvents, DMA, DMF, DMSO, DES and NADES.

|13| The process of any one of embodiments |11| to 1121, wherein at least one of these features apply during dividing in step x):

a)) The aqueous composition has a density of 1.0 g/cm$^3$ or more;
b)) wherein the step x) has a throughput of at least 0.5 L/m$^2$/h/bar;
c)) the temperature of the base composition during the dividing is in the range from 10 °C to 150 °C;
d)) the pressure of the base composition during the dividing is in the range from 1 to 20 bar;
Or a combination of any two or more of the above.

|14| The process of any one of embodiments |11| to |13|, wherein the dividing in step x) is performed using a technique selected from one of these: filtration, membrane filtration, deep filtration, centrifugation, decantation, rotating decanter, flotation, cycloning.

|15| The process of any one of embodiments |11| to |14|, further comprising this step:
xi) Splitting the second composition into a solid phase comprising the vinyl halide polymer and a recovered organic phase.

|16| The process of embodiment |15|, wherein the splitting is performed using at least one technique selected from the group consisting of precipitation, distillation, centrifugation, freeze drying, removal of organic phase in vacuo, flash drying, fluid bed drying, and stripping.

|17| The process of any one of the preceding embodiments, wherein the first composition is split into a recovered organic phase and a further phase wherein the further phase comprises more additives than the recovered organic phase.

|18| The process of any one of embodiments from |1| to |17|, wherein the recovered organic phase is treated by a treatment, wherein a liquid organic phase is obtained, which can be reused in the providing step viii) of the process.

|19| The process of any one of the preceding embodiments, wherein the liquid organic phase in step viii) comprises an amount of at least 90 wt.% of recovered organic phase.

|20| The process of any one of the preceding embodiments, wherein the vinyl halide polymer is obtained in solid state.

|21| The process of any one of the preceding embodiments, wherein the vinyl halide polymer comprises less than 1 wt.% of organic solvent.

|22| The process of any one of the preceding embodiments, wherein the vinyl halide polymer comprises less than 1'000 ppm of additives, with respect to each additive.

|23| The process of any one of the preceding embodiments, wherein the additives are selected from inorganic and organic compounds.

|24| The process of any one of the preceding embodiments, wherein the organic phase in step viii) comprises less than 40 wt.% of water, based on the total amount of organic phase.

|25| The process of any one of the preceding embodiments, wherein vinyl halide polymer has at least 10 times less additives, per additive substance, than the plastic composition.

|26| The process of any one of the preceding embodiments, wherein vinyl halide polymer has at least 10 times less lead than the plastic composition.

|27| The process of any one of the preceding embodiments, wherein vinyl halide polymer has at least 10 times less DEHP than the plastic composition.

|28| A plastic composition comprising a vinyl halide polymer obtainable by a process according to any of the preceding embodiments.

|29| An article comprising a plastic composition comprising a vinyl halide polymer as in embodiment |28|, or obtainable by the process according to any one of embodiments |1| to |27|.

|30| The article according to embodiment |29|, wherein the article is selected from the group consisting of fiber, a filament, a textile, a film and a formed body, such as pipe, tube or profile, door or shutter, or an object of more complex geometrical shape.

|31| A method of manufacture of an article as described in embodiment |29| or |30|, comprising at least these steps:

> I) Providing a feed composition comprising at least 5 wt.% of plastic composition comprising the vinyl halide polymer;
> II) Melting the plastic composition and obtaining a preform;
> III) Manipulating the preform to obtain the article.

|32| An article obtainable by the embodiment of |31|.

|33| A use of vinyl halide polymer in an article, wherein the vinyl halide polymer is obtained by the process according to any one of embodiments |1| to 1271 or |31|, or according to any one of embodiments |28| to |30| or |32|.

|34| A use of a two-step specific gravity separation with particles of a waste plastic composition comprising at least one vinyl halide polymer for increasing the concentration of the plastic composition comprising the vinyl halide polymer in a product.

|35| A use of a two-step specific gravity separation with particles of a waste plastic composition comprising at least one vinyl halide polymer to improve the purity of the plastic composition comprising the vinyl halide polymer.

**Detailed Description of the invention**

A first aspect of the invention is a process of making a plastic composition comprising a vinyl halide polymer comprising at least these steps:

> i) Providing
>
>> [1] a feed composition comprising particles of a plastic composition,
>> wherein the plastic composition comprises at least 10 wt.% of the vinyl halide polymer and one or more additives; and
>> [2] a first aqueous phase comprising water and at least one salt $S1$;
>>
>>> wherein the salt $S1$ is dissolved in the water at least partially;
>>> wherein the first aqueous phase has a density $D1$;
>>
>> [3] a second aqueous phase comprising water and at least one salt $S2$,
>>
>>> wherein the salt $S2$ is dissolved in the water at least partially;
>>> wherein the second aqueous phase has a density $D2$,
>
> ii) Forming a slurry of the first aqueous phase and the feed composition;
> iii) Dividing the slurry into a first intermediate phase and a second intermediate phase, wherein the first intermediate phase has a higher content of particles of the plastic composition comprising the vinyl halide polymer than the second intermediate phase;
> iv) Forming a suspension of the first intermediate phase and the second aqueous phase;
> v) Dividing the suspension into a third aqueous phase and a fourth aqueous phase,
>
>> wherein the third aqueous phase has a higher content of particles of the plastic composition comprising the vinyl halide polymer than the fourth aqueous phase;
>> wherein the plastic composition comprising the vinyl halide polymer has a density $DP$;
>> wherein one condition selected from the following applies:
>>
>>> A) $D1 \leq |DP\text{-}x|$ and $D2 \geq |DP\text{+}y|$ and each x, y independent from the other $\geq 0.05$; or

B) **D1** $\geq$ |**DP**+y| and **D2** is $\leq$ |**DP**-x| and each x, y independent from the other $\geq$ 0.05.

In an embodiment of the process of the invention, making comprises at least one task or more selected from the following elements: recovering, purifying, recycling, concentrating, or a combination of two or more thereof.

The feed composition can be of any kind known to a skilled person and considered potentially useful for providing in the present process. The feed composition is often composed of materials and items which were disposed as waste before. So, the present process could be seen as a recycling of vinyl halide polymers and items comprising one or more vinyl halide polymers. The feed composition is usually composed of solid components, so-called particles or pieces. Prior use of these items can be post-consumer waste, such packaging of food, beverages, non-food, liquids, solids and all kinds of other tradable goods. Also, these items can be construction waste, such as packaging of construction materials and even construction materials itself, like windows and doors with plastic frames, pipe, flooring, rigid films, profile, sidings, ceilings, medical and food film, medical articles, tubes, doors, shutters, bottles, fittings, shoe soles, cables, and so on, as well as post-production waste like cut-offs from profiles, pipes etc..

More specifically, the feed composition comprises a plurality of particles of a plastic. A number of these particles comprise at least 10 wt.% of one or more vinyl halide polymers, i.e. of one, or a combination of two or more vinyl halide polymers. Accordingly, when the term "vinyl halide polymer" used throughout this description refers to a single vinyl halide polymer, as well as to a combination of two or more vinyl halide polymers. This simplification is made to enhance the legibility of the present text. If the feed composition comprises more than a single kind of particles of plastic composition comprising vinyl halide polymer, the wt.% describe the total amount of all vinyl halide polymers.

The feed composition may comprise at least 15, 20, 25, 30, 35, 40, 45, 50, 55, 60, 65, 70, 75, 80, 85 or 90 wt. % of particles of plastic composition comprising vinyl halide polymer, the wt.% with respect to the total feed composition. For example, the feed composition may comprise from 10 to 90 wt.%, or from 20 to 90 wt.%, from 30 to 90 wt.%, from 40 to 90 wt.%, or from 10 to 85 wt.%, from 10 to 75 wt.%, or from 10 to 55 wt.%, or from 20 to 90 wt.%, from 20 to 80 wt.%, or from 30 to 90 wt.%, from 30 to 80 wt.% of particles of plastic composition comprising vinyl halide polymer, the wt.% with respect to the total feed composition.

This is an embodiment of the first aspect of the invention. It may be combined with any single other embodiment or plurality of embodiments of the first aspect of the invention.

Also, the plastic composition comprising vinyl halide polymer comprises vinyl halide polymer at least 15, 20, 25, 30, 35, 40, 45, 50, 55, 60, 65, 70, 75, 80, 85 or 90 wt. %, the wt.% with respect to the total plastic composition. For example, the plastic composition may comprises vinyl halide polymer in a range from 15 to 99, 20 to 99, 25 to 99, 30 to 99, 35 to 99, 40 to 99, 45 to 99, 50 to 99, 55 to 99, 60 to 99, 65 to 99, 70 to 99, 75 to 99, 80 to 99, 85 to 99, or 90 to 99, or in a range from 15 to 95, 20 to 95, 25 to 95, 30 to 95, 35 to 95, 40 to 95, 45 to 95, 50 to 95, 55 to 95, 60 to 95, 65 to 95, 70 to 95, 75 to 95, 80 to 95, 85 to 95, or 90 to 95, or in a range from 15 to 90, 20 to 90, 25 to 90, 30 to 90, 35 to 90, 40 to 90, 45 to 90, 50 to 90, 55 to 90, 60 to 90, 65 to 90, 70 to 90, 75 to 90, 80 to 90 or 85 to 90, the values and ranges all given as wt.%, the wt.% with respect to the total plastic composition. Often typical plastic compositions comprise from 20 to 90 wt.% vinyl halide polymer. The remainder in the plastic composition to 100 wt.% is composed of further constituents.

This is an embodiment of the first aspect of the invention. It may be combined with any single other embodiment or plurality of embodiments of the first aspect of the invention.

In a preferred variant, the plastic composition comprising vinyl halide polymer comprises 70 to 95 wt.% vinyl halide polymer, based on the total amount of that plastic composition; and the feed composition comprises from 10 to 90 wt.%, or from 20 to 90 wt.%, from 30 to 90 wt.%, from 40 to 90 wt.%, or from 10 to 85 wt.%, from 10 to 75 wt.%, or from 10 to 55 wt.%, or from 20 to 90 wt.%, from 20 to 80 wt.%, or from 30 to 90 wt.%, from 30 to 80 wt.% of particles of that plastic composition comprising vinyl halide polymer, the wt.% with respect to the total feed composition.

The vinyl halide polymer can be of any kind known to and considered suited to be employed in the present invention. The vinyl halide polymers include the homopolymers and copolymers of vinyl halides including, for example, vinyl chloride and vinyl bromide. The term vinyl halide polymers comprise also copolymers of different vinyl halides with each other or copolymers of a vinyl halide with one or more polymerizable olefinic monomers having at least one terminal $CH_2$=C< group.

As examples of such olefinic monomers, there may be mentioned the alpha, beta-olefinically unsaturated carboxylic acids such as acrylic acid, methacrylic acid, methacrylic acid, alpha-cyanoacrylic acid, etc.; esters of acrylic acid such as methylacrylate, ethylacrylate, butylacrylate, octylacrylate, cyanoethylacrylate, etc.; esters of methacrylic acid such as methylmethacrylate, butylmethacrylate, etc.; nitrile such as acrylonitrile, methacrylonitrile, etc.; acrylamides such as methylacryl-amide, N-methylol acrylamide, N-butoxy methylacrylamide, etc.; vinyl ethers such as ethyl vinyl ether, chloroethyl vinyl ether, etc.; the vinyl ketones; styrene and styrene derivatives such as methyl styrene, vinyl toluene, chlorostyrene, etc.; vinyl naphthalene; esters such as allyl or vinyl chloroacetate, vinyl acetate, etc.; vinyl pyridene; methyl vinyl ketone; the diolefins, including butadiene, isoprene, chloroprene, etc.; and other polymerizable olefinic monomers of the types known to those skilled in the art.

Accordingly, there may be mentioned as well-suited vinyl halide polymers polyvinylchloride (PVC), PVC-copolymers such as PVC-co-vinyl acetate polymer, chlorinated PVC, polyvinylidene-co-PVC-polymer, impact modified PVC, and more complex copolymers like PVC/PCTFE-PVDC (sold as Aclar by Honeywell or Kel-F by 3M, Inc.).

The vinyl halide polymers particularly useful in the present invention are homopolymers and copolymers made by the polymerization of vinyl chloride alone or in admixture with one or more polymerizable olefinic monomers copolymerizable therewith. The most preferred vinyl polymer, or resin, is polyvinylchloride (PVC) homopolymer produced by mass polymerization or suspension polymerization. However, it is well understood that the invention may be applied to others of the above-described polymers, and is not limited in any way.

The vinyl halide polymer usually has a molecular weight of at least 5 kDa. For example, the vinyl halide polymer has a molecular weight of at least 7 kDa, or at least 10 kDa, or at least 15 kDa, or at least 20 kDa, or at least 25 kDa, or at least 50 kDa. For example, the vinyl halide polymer has a molecular weight in the range of 5 kDa to 150 kDa, or from 5 kDa to 120 kDa, or from 10 kDa to 100 kDa, or from 10 kDa to 80 kDa.

The molecular weight of the vinyl halide polymer in this context is the so-called number-averaged molecular weight, also identified as $\overline{M_n}$ or simply $M_n$. The values of $\overline{M_n}$ mentioned here are determined with GPC according to and under observation of the further conditions detailed in the section "test methods". It is common knowledge that the molecular weight information given here is relative to the calibration standard and test conditions employed. Other analytical methods and/or deviation from the testing protocol given in the test method are likely to result in other values for molecular weight. Further it is known that this GPC usually has a cut-off around 500 Da. Constituents of less than this molecular weight cannot be analyzed.

Further constituents of the plastic composition polymers are different from vinyl halide polymers, additives, contamination or dirt, or a combination of two or more thereof.

A group of the further constituents to the plastic composition, the so-called additives usually have a molecular weight of less than 5 kDa. For example, the further constituents have a molecular weight of less than 4 kDa, less than 3 kDa, less than 2 kDa or less than 1 kDa. Very often, the further constituents have a molecular weight of at least 80 Da. The molecular weight of the further constituents can be calculated based on the molecular weight of the composing atoms.

The number of additives and contaminants is illimited, and one or more of these can be present. The additives can be categorized by structural features as well as by function.

For example, additives present in the plastic composition can be antioxidants like UV stabilizers and flame retardants; rheological modifiers like softeners and plasticizers like epoxidized soy bean oil for the manufacturing of items or for the vinyl halide polymer after manufacture, e.g. during use; antioxidants; antistatic agents; heat stabilizers; lubricants and slipping agents; fillers; colorants, pigments and dyes; impact modifier like e.g. polyacrylate core shell impact modifiers and chlorinated polyethylene impact modifier; processing aids, e.g. chlorinated paraffine polyacrylates; blowing agents; antifog agents and biocides.

Based on structural features, additives can be organic, inorganic or hybrid; hybrid means having features of both organic and inorganic.

A group of more focused inorganic additives are lead compounds, i.e. salts and/or complexes comprising lead (Pb). Some of these are heat stabilizers and/or flame retardants. Examples of inorganic additives possibly present in vinyl halide polymer containing compositions are salts of Pb, Cd, Ca, Zn, Ba, and Sn, Ti and combinations thereof. These inorganic additives are often used as heat stabilizers, UV stabilizers, and fillers.

The organic additives can serve a wide range of duties, for example, as plasticizers and heat stabilizers.

Examples of organic additives are carboxylates of heavy metals, such stearates of lead, calcium, barium and zinc; octoates of calcium, barium and zinc; dialkyltin laurate, - maleate and bis(isooctylthioglycollate); lead phthalate; lead maleate; dialkylphthalates and mixed aliphatic-aromatic phthalates; trialkyl mellitates; dialkyl adipates and sebacates. Two of the most known additives from this group are Di(2-ethylhexyl)-phthalate and normal and/or dibasic lead stearate, tribasic lead phthalate, tribasic lead sulphate, dibasic lead phosphite.

The liquid organic phase can be of any kind known to and considered possibly useful by a skilled person to swell and/or dissolve the plastic composition.

For example, the liquid organic phase may comprise at least one solvent selected from a group of solvent types consisting of ketones, ethers, ester, aromatics, halogenated solvents, dimethylformamide (DMF), dimethylacetamide (DMA) and Dimethyl sulfoxide (DMSO), or a combination of two or more solvents, either from the same or different solvent types. Examples of preferred solvent types are ketones and ethers.

Solvents of the solvent types of ketones, ethers, esters and halogenated solvents can be either aliphatic or aromatic. The aliphatic ones can be acyclic or cyclic. Possibly, the solvent may comprise more than a single carbon cycle. Moreover, a cyclic solvent may have one or more heteroatoms in its cycle, i.e. an atom or atoms which are structural part of the cycle but not carbon (-C-).

Some examples of acyclic ketones are , ethyl methyl ketone (MEK), diethyl ketone, methyl isobutyl ketone, methyl isoamyl ketone, di-(isobutyl) ketone, 3-pentanone, 2-pentanone.

An example of an ester is ethyl acetate.

Some examples of cyclic ketones are cyclopentanone, cyclohexanone, cycloheptanone and isophorone.

Some examples of cyclic ethers are tetrahydrofuran (THF), 2-methyl tetrahydrofurane and 1,4 dioxane.

Some examples of aromatics are toluene, benzene and xylene.

Chlorinated solvents are usually another choice when thinking of halogenated solvents. Some examples of halogenated solvents are dichloromethane, methylene chloride, 1,1-dichloreoethylene, Ethylene dichloride, chloroform, 1,1-dichloroethane, trichloroethylene, carbon tetrachloride, chlorobenzene, o-dichlorobenzene.

Further, the at least one organic solvent can be selected from ionic liquids, such as DES and NADES.

Ionic Liquids are abbreviated IL. An ionic liquid is a salt of two components which is in liquid state at temperatures below or equal to 100 °C.

DES is an abbreviation and stands for Deep Eutectic Solvents. DES are organic solvents composed of a mixture of two or more organic compounds, which are capable of interacting via hydrogen bonds. So, a DES comprises at least one component which is a hydrogen bond acceptor (HBA), such as a halide salt, and at least a further component, which is a hydrogen bond donor (HBD). DES can be obtained by mixing the components at an elevated temperature, e.g. around 100 °C for 1 to 2 hours. Alternatively, DES can be obtained by grinding the components at room temperature until a clear liquid is formed. The melting point of the DES is lower than the melting point of each of the individual components. Such is called an eutectic point. DES have a melting point below room temperature, so DES are liquids at room temperature.

Examples of the HBA component can be selected from the group consisting of choline derivatives, tetraalkylammonium salts, dialkylaminium salts, organic phosphonium salts and metal halides. These derivatives and salts are often chloride of fluorides.

Examples of HBAs are chloride and bromide of zinc, tin, aluminum, gallium, indium, chromium, cobalt, copper, iron and nickel; choline chloride, choline fluoride, 2-(chlorocarbonyloxy)-N,N,N-trimethylethenaminium chloride, betaine, nicotinic acid, histidine, proline, glycine, alanine, , tetramethylammonium chloride, tetra-n-ethylammonium chloride, tetra-n-propyl-ammonium chloride tetra-n-butylammonium chloride, N,N-diethylethanolammo-nium chloride, N-ethyl-2-hydroxy-N,N-dimethylethanaminium chloride, N-benzyl-2-hydroxy-N,N-dimethylethanaminium chloride, Benzyltriphenylphosphonium chloride, methyltriphenylphosphonium chloride, tetrabutylphosphonium chloride and lidocaine.

Examples of the HBD component can be selected from the group consisting of amines; amides; amino acids; mono- and polyvalent alcohols, such as bivalent, trivalent alcohols and sugars; organic acids, such as mono- and polyvalent carboxylic acids, such as bivalent, trivalent and tetravalent carboxylic acids, cyclic esters like lactones.

Examples of individual HBD components are urea, glycerol, glucose, fructose, 1,4-butanediol, thymol, PTS, phenyl ethanol, such as lactic acid, oxalic acid, citric acid, succinic acid, amino acids, hexanoic acid, octanoic acid, decanoic acid, dodecanoic acid, adipic acid, acetamide, phenol, benzamide, benzoic acid, ethylene glycol, triethylene glycol, malonic acid, thiourea, 1,3-dimethyl urea, 1-methyl urea, menthol, 1-naphthol.

Preferred DES may be composed of these HBD-HBA combinations: choline chloride - urea; choline chloride - ethylene glycol; choline chloride - glycerol.

The molar ratio HBD:HBA is often in the range of 1.8:1 to 3.3:1, for example 2:1 and 3:1.

Further, DES may be composed of one HBD and two HBA, for example choline chloride - malic acid - glycerol. The molar ratio may be varied and could be, e.g., 1:1:1, 2:1:3 or 1:2:1.

DES preferred in the present invention can be all those considered suitable by a skilled person to swell PVC or another vinyl halide polymer. DES can be prepared in a very simple manner. The corresponding amounts of each component (mole ratios) are weighed in dissolved in water, then mixed and homogenized, and finally excess water is removed at 50°C under vacuum until a clear viscous liquid is obtained.

NADES is also an abbreviation and stands for Naturally based DES. The NADES are based on natural products, such as organic acids, amino acids, sugars and choline derivatives. NADES is a subgroup within DES.

This is an embodiment of the first aspect of the invention. It may be combined with any single other embodiment or plurality of embodiments of the first aspect of the invention.

A way to find organic solvents suited for the organic phase is to pay attention to the Hansen solubility parameter $\delta$, which can be found in tables, see for example Table A. 1 in: C.M. Hansen, "Hansen Solubility Parameters - A user's handbook", 2000, by CRC Press. The parameter $\delta$ is defined as:

$$\delta = \sqrt{\delta_d^2 + \delta_p^2 + \delta_h^2} \qquad (1)$$

As mentioned, $\delta_d$, $\delta_p$ and $\delta_h$ are found in the literature and $\delta$ can be calculated according to formula (1).

Moreover, PVC and/or vinyl halide polymers should have a certain solubility in the liquid organic phase, yet more preferred at room temperature.

Preferably, the vinyl halide polymer, such as PVC, has a good solubility in the liquid organic phase. Solubility is considered "good", if 100 ml of the solvent dissolve 5 g or more of the vinyl halide polymer, for example PVC. Each of the liquid organic phase can be composed of a single constituent or two or more constituents, which is a mixture of constituents.

This is an embodiment of the first aspect of the invention. It may be combined with any single other embodiment or plurality of embodiments of the first aspect of the invention.

In an embodiment of the process of the invention, organic solvents suited for the organic phase may have a Hansen solubility parameter $\delta$ in the range from 18 to 25 Mpa$^{0.5}$.

This is an embodiment of the first aspect of the invention. It may be combined with any single other embodiment or plurality of embodiments of the first aspect of the invention.

The liquid organic phase comprises at least one, optionally a combination of two or more constituents. Main constituents of the liquid organic phase are organic solvents. The organic solvents forming the combination are miscible in each other, by preference. The liquid organic phase may contain further constituents, different from aforementioned organic solvents.

Further, the liquid organic phase may comprise some so-called non-solvents. A non-solvent in the present context is a compound in which PVC dissolves by less than 1 g/ Litre of non-solvent. Usually, the total of all non-solvents in the liquid organic phases is less than 20 vol%, or less than 10 the vol% based on the total volume of the liquid organic phase. Some examples of compounds which are non-solvents for PVC, are water, alkanes, alcohols, nonpolar organic molecules.

With regard to water, the amount of non-solvent in the liquid organic phase should be as little as possible, e.g. 50 g/l at most, because it obstructs a dissolution of the vinyl halide polymer in step viii).

This is an embodiment of the first aspect of the invention. It may be combined with any single other embodiment or plurality of embodiments of the first aspect of the invention.

The liquid organic phase, which is provided in step viii) may comprise as constituent at least one organic solvent with a dipole moment of at least 1.6, for example at least 1.8, 2.0, 2.2, 2.4, 2.6, 2.8, 3.0, 3.2, 3.4, or at least 3.8. More preferred, at least one organic solvent has a dipole moment of at least 2.4, or at least 2.6. Often, the dipole moment is at most 4.2, or 4.0, 3.8, 3.6, 3.4, or at most 3.2. Any organic solvent or combination of two or more thereof, or organic solvent combination with further organic constituents dissolved in the organic phase which is known to a skilled person and considered suited here, can be employed. In a preferred variant, the first liquid organic phase as a whole has a dipole moment as described just above. This could be true, even if one or more constituents of the first liquid organic phase have a dipole moment which is beneath the mentioned value. The dipole moment can be determined by refractive index measurement as described in the test methods' section. This is an embodiment of the first aspect of the invention. It may be combined with any single other embodiment or plurality of embodiments of the first aspect of the invention.

The liquid organic phase may have a temperature of 10°C or more, for example 20 °C or more, or 30 °C or more, or 40 °C or more. Often, the temperature of the liquid organic phase is at most 150 °C or less, for example, 130 °C or less, or 110 °C or less. So, the temperature of the liquid organic phase could be in the range from 10 °C to 150 °C, or from 20 °C to 150 °C, or from 40 °C to 130 °C, or from 40 to 110 °C, or in the range from 30 to 80°C, or from 30 to 70 °C, or from 40 to 80°C, or in the range from 40 to 70 °C. This is an embodiment of the first aspect of the invention. It may be combined with any single other embodiment or plurality of embodiments of the first aspect of the invention.

Preferably, at least one, better all of the organic solvents constituting the liquid organic phase have a dipole moment of more than 1.6. This is an embodiment of the first aspect of the invention. It may be combined with any single other embodiment or plurality of embodiments of the first aspect of the invention.

In a further embodiment of the invention, vinyl halide polymers such as PVC should have a good solubility in the liquid organic phase. For example, vinyl halide polymer and/or PVC should have a solubility of at least 2 g/ 100 ml, or at least 5 g/ 100 ml. Often, the solubility is not unlimited. For example, the vinyl halide polymer and/or PVC may have a solubility of not more than 50 g/ 100 ml, or 30 g / 100 ml.

Some examples of possibly suited liquid organic phases are these: cyclopentanone (@≥ 40 °C), cyclohexanone, N,N-dimethylacetamide (DMA), dimethylformamide (DMF), tetrahydrofuran (THF), 2-butanone (MEK) (@≥60°C).

Indications in parentheses mentioned with a solvent or liquid organic phase indicate a temperature or temperature range in which this solvent or liquid organic phase is suited, by preference.

It is a feature of the liquid organic phase that a vinyl halide polymer like PVC is dissolved upon contact with the liquid organic phase. Dissolving in this context means that more than 95 wt.% of a sample of 2 mm x 2 mm x 2 mm of the vinyl halide polymer is dissolved to at least 95%, based on the initial weight of the sample, at the boiling point of the liquid organic phase and within 60 minutes. If the liquid organic phase comprises more than one organic solvent, the boiling point to determine dissolution is the boiling point of the lowest boiling constituent of the liquid organic phase. If the lowest boiling point of the liquid organic phase is higher than 150 °C, the temperature for testing the 95 wt.% dissolution criterium is 150 °C.

This is an embodiment of the first aspect of the invention. It may be combined with any single other embodiment or plurality of embodiments of the first aspect of the invention.

In another embodiment, an amount of a non-solvent can be added to the liquid organic phase. For example, the non-solvent is an organic or inorganic solvent in which vinyl halide polymers such as PVC are not fully soluble, or even insoluble. Examples of non-solvents are alcohols, alkanes & water. The alcohols can be aliphatic, and further monovalent or polyvalent, such as di- or trivalent. They can also be acyclic and cyclic, linear or branched. Examples of monovalent alcohols: C1 - C20, or C1 - C10, such as methanol, ethanol, propanol, butanol, pentanol, hexanol, heptanol, octanol, decanol, dodecanol, iso- and neo-alcohols thereof; examples of divalent alcohols: C2- C10, or C2 - C6, such as Ethan-1,2-diol, Propan-1,2-diol, Propan-1,3-diol, Butan-1,2-diol, Butan-1,3-diol, Butan-1,4-diol, Butan-2,3-diol, Pentan-1,5-diol, Hexan-1,6-diol, Octan-1,8-diol, Nonan-1,9-diol and Decan-1,10-diol; an example of a trivalent, acyclic and alcohol linear is glycerol; a trivalent, acyclic and branched alcohol is trimethylol propane (TMP). Examples of cyclic monovalent alcohols are cyclopentanol and cyclohexanol.

Examples of alkanes are C5 - C40, or C6 - C20, or C6 - C12, such as pentane, hexane, heptane, octane, nonane, decane, undecane, dodecane, tridecane, tetradecane, pentadecane, hexadecane, heptadecane, octadecane, nonadecane, icosane, triacontane and tetracontane. The alkanes are preferably linear, branched or contain or form one or more cycles, i.e. be cyclic.

This is an embodiment of the first aspect of the invention. It may be combined with any single other embodiment or plurality of embodiments of the first aspect of the invention.

The first and the second aqueous phase can be of any kind known to and considered possibly useful by a skilled person in the present context. The first and/or the second aqueous phase may comprise at least 30 wt.%, for example at least 50 wt.%, or at least 70 wt.%, or at least 80 wt.%, at least 90 wt.%, or at least 95 wt.% of water. The first and/or second aqueous phase may consist up to and including 100 wt.% of water. The water may be of any kind, such as tap water or recycled water or deionized.

According to the invention, the first and second aqueous phase comprise one or more salts, identified as salt *S1* when in the first aqueous phase, and *S2* in the second aqueous phase. For the purpose of the following description, the identifiers *S1, S2* are not mentioned. The salt can be organic or inorganic, preferably inorganic salt. This may be anyone or any number of salts known to and considered useful by a skilled person in the present context. The salts may have mono-, di- or trivalent cations, and/or mono- through hexavalent anions.

The first and/or the second aqueous phase comprises water, and may further comprise up to 80 wt.% of one or more salts. Preferably, only one salt is used to prepare the aqueous phase. The maximum concentration of a salt depends on its solubility. A skilled person knows where to look up such information, or to conduct a simple experiment to find out by himself. A source to look up the maximum concentration of a certain inorganic salt at a given temperature, e.g. 20 °C, is the CRC Handbook of Chemistry and Physics, 95th edition (2014), Section 5-190 to 5-195.

For example, the first and/or the second aqueous phase may comprise up to 65, 60, 55,50, 45, 40, 35, 30, 25, 20, 15, 10 wt.% of one or more salts. Often the first aqueous phase comprises at least 1, 2, 3, 4 or at least 5 wt.% of one or more salts. Preferably, the first and/or second aqueous phase may comprise one or more salts in the range from 1 to 80 wt.%, 5 to 80 wt.%, 10 to 80 wt.%, 10 to 70 wt.% 10 to 65 wt%., 10 to 60 wt.%, 10 to 55 wt.%, 10 to 50 wt.%, 10 to 45 wt.%, or 10 to 40 wt.% of one or more salts. Preferably, all the above wt.% of salt in water refer to a temperature of 20 °C, and the wt.% refer to the total amount of the aqueous phase.

This is an embodiment of the first aspect of the invention. It may be combined with any single other embodiment or plurality of embodiments of the first aspect of the invention.

Preferred salts to be dissolved in the first and/or the second aqueous phase are selected from the group consisting of: group Ia,b or Iia,b -halides, -carbonates, - acetates, - phosphates, -nitrates, -sulfates, and -hydroxides; yet more preferred are group Ia,b hydroxides, -halides, such as NaCl ,$CaCl_2$, $K_2CO_3$ and $ZnCl_2$.

This is an embodiment of the first aspect of the invention. It may be combined with any single other embodiment or plurality of embodiments of the first aspect of the invention.

As already described, the first aqueous phase has a density *D1* and the second aqueous phase a density *D2*. The particles of plastic composition comprising the vinyl halide polymer, which should be made, have a density *DP*.

*DP* is not necessarily the density of pure rigid PVC, pure plasticized PVC and so on. Usually, *DP* is selected according to the density of a rigid PVC which comprises one or more additives, as does, e.g. PVC from window profiles and pipes. For example, PVC used in window profiles and pipes can have a density of about1.45 g/cm³, i.e., from 1.4 to 1.5 g/cm³, because of the additives in this PVC; plasticized PVC used in construction often has a density of about 1,25 g/cm³, i.e. from 1.2 to 1.3 g/cm³ because of the additives therein; PVC flooring may have a higher density, etc. Accordingly, *DP* can be selected according to the material to be made, or recycled.

As described, either the first aqueous phase or the second aqueous phase has a density equal to or smaller than *DP* minus a value x; the other aqueous phase has a density equal to or larger than *DP* plus a value y. So, if the first aqueous phase has a density of |*DP*-x| or less, then the second aqueous phase has a density of |*DP*+y| or more. Similarly, if the first aqueous phase has a density of |*DP*+y| or more, then the second aqueous phase has a density of

|$DP$-x| or less. In general, the value of x and y can be, independent from each other, equal to or more than: 0.05; 0.07; 0.1; 0.15; 0.2; 0.25; 0.3; 0.35; 0.4; 0.45; 0.5; 0.6. Preferably, x and y can be, independent from each other, equal to or more than: 0.2; 0.3; 0.4; 0.5. In a further variant, x equals y, and is about 0.2; 0.3; 0.4 or 0.5. About means that x and y can be ±0.05 of the indicated value.

This is an embodiment of the first aspect of the invention. It may be combined with any single other embodiment or plurality of embodiments of the first aspect of the invention.

In another embodiment of the first aspect of the invention, the value of x and y can be, independent from each other, in the range from 0.05 to 0.6; or from 0.05 to 0.5; 0.05 to 0.45; 0.05 to 0.4; 0.05 to 0.35; 0.05 to 0.3; 0.05 to 0.25; 0.05 to 0.2; or from 0.1 to 0.5; 0.1 to 0.45; 0.1 to 0.4; 0.1 to 0.35; 0.1 to 0.3; 0.1 to 0.25; 0.1 to 0.2; or from 0.15 to 0.5; 0.15 to 0.45; 0.15 to 0.4; 0.15 to 0.35; 0.15 to 0.3; 0.15 to 0.25; 0.15 to 0.2; or from 0.2 to 0.5; 0.2 to 0.45; 0.2 to 0.4; 0.2 to 0.35; 0.2 to 0.3; 0.2 to 0.25; 0.2; or from 0.25 to 0. 5; 0.25 to 0.45; 0.25 to 0.4; 0.25 to 0.35; 0.25 to 0.3; or from 0.3 to 0.5; 0.3 to 0.45; 0.3 to 0.4; 0.3 to 0.35. Other preferred ranges are: from 0.3 to 0.6; 0.35 to 0.6; 0.4 to 0.6; 0.45 to 0.6; 0.5 to 0.6; or from 0.3 to 0.55; 0.35 to 0.55; 0.4 to 0.55; 0.45 to 0.55; or 0.5 to 0.55; or from 0.3 to 0.5; 0.35 to 0.5; 0.4 to 0.5; or 0.45 to 0.5. In a variant of this, x and y are the same.

This is an embodiment of the first aspect of the invention. It may be combined with any single other embodiment or plurality of embodiments of the first aspect of the invention.

The density $DP$ of the plastic composition comprising the vinyl halide polymer, which should be made, can be any one known by skilled person for a vinyl halide polymer, in particular one comprising additives for a commercial use. The unit of density is g/cm$^3$. As already described, typical densities of soft and rigid PVC used in buildings and construction are known. For example, plasticized PVC used there may have a density in the range around 1.2 - 1.3 g/cm$^3$, but can be less or even more, depending on further additives, such as filler and others. Rigid PVC used there often has a density around 1.4 - 1.5 g/cm$^3$, but this may also vary depending on further additives. Polyvinylidene chloride (PVDC) has a density around 1.6 - 1.7 g/cm$^3$ and polyvinylidene fluoride (PVDF) around 1.7 - 1.8 g/cm$^3$, and a selection of $DP$ should consider a deviation from these values according to the additive included in the commercial product which led to the feed composition. Inorganic matter like glass and metal found in feed streams usually have densities of more than 2.0 g/cm$^3$. Many of the non-halogenated plastics as well as paper and wood often have densities of less than 1.3 g/cm$^3$, or even less than 1.0 g/cm$^3$.

If plasticizer or additives are added further to soft PVC, the density $DP$ can be lower or higher. Similarly, the density $DP$ can deviate if rigid PVC comprises fillers or other additives of high density. A skilled person is able to select the densities $D1$, $D2$ of the first and the second aqueous phase based on the feed composition and the targeted density $DP$ according to the plastic composition to be made. These considerations apply also to other vinyl halide polymers, like polyvinylidene chloride and polyvinylidene fluoride.

In another embodiment of the first aspect of the invention, the plastic composition, which comprises the vinyl halide polymer, has a $DP$ of about 1.4-1.5 g/cm$^3$, the plastic composition being rigid PVC for example. In this case, it is desired to divide the plastic composition comprising the vinyl halide polymer from particles having a density of 1.4 g/cm$^3$ or less in a first step, and then from particles having a density of 1.5 g/cm$^3$ or more, or vice versa. Accordingly, either the density $D1$ should be equal or less than 1.4 g/cm$^3$, for example 1.3 g/cm$^3$ or less, or 1.2 g/cm$^3$ or less, and the density $D2$ should be equal or more than 1.5 g/cm$^3$, for example 1.6 g/cm$^3$, for example 1.7 g/cm$^3$ or more, or 1.8 g/cm$^3$ or more; or vice versa. In general, a density of 0.9 g/cm$^3$ is usually not undercut, and a density of 2.0 g/cm$^3$ not surpassed. So, the density $D1$ should in the range from 1.4 g/cm$^3$ to 0.9 g/cm$^3$, for example from 1.3 g/cm$^3$ to 1 g/cm$^3$, or from 1.2 g/cm$^3$ to 1 g/cm$^3$, and the density $D2$ should be in the range from 1.5 g/cm3 to 2.0 g/cm$^3$, for example from 1.7 g/cm$^3$ to 2.0 g/cm$^3$, or from 1.8 g/cm$^3$ to 2.0 g/cm$^3$; or vice versa. For $D1$, $D2$ around 1.0 g/cm$^3$ little salt must be contained in the aqueous phase; for a density below 1.0 g/cm$^3$ an organic solvent must be added to the aqueous phase in addition; preferably the organic solvent is miscible with the aqueous phase in the amount added.

This is an embodiment of the first aspect of the invention. It may be combined with any single other embodiment or plurality of embodiments of the first aspect of the invention.

In another embodiment of the first aspect of the invention, the plastic composition, which comprises the vinyl halide polymer, has a $DP$ of about 1.2-1.3 g/cm$^3$, the plastic composition comprising the vinyl halide polymer being plasticized PVC for example. In this case, it is desired to divide plastic composition comprising the vinyl halide polymer from particles having a density of 1.2 g/cm$^3$ or less in a first step, and then from particles having a density of 1.3 g/cm$^3$ or more, or vice versa. Accordingly, either the density $D1$ should be equal or less than 1.2 g/cm$^3$, for example 1.1 g/cm$^3$ or less, or 1.0 g/cm$^3$ or less, and the density $D2$ should be equal or more than 1.3 g/cm$^3$, for example 1.4 g/cm$^3$ or more, or 1.5 g/cm$^3$ or more, or 1.6 g/cm$^3$ or more; or vice versa. In general, a density of 0.9 g/cm$^3$ is usually not undercut, and a density of 2.0 g/cm$^3$ not surpassed. So, the density $D1$ should in the range from 1.3 g/cm$^3$ to 0.9, for example from 1.3 g/cm$^3$ to 1 g/cm$^3$, or from 1.2 g/cm$^3$ to 1 g/cm$^3$, and the density $D2$ should be in the range from 1.3 g/cm$^3$ to 2.0 g/cm$^3$, for example from 1.4 g/cm$^3$ to 2.0 g/cm$^3$, or from 1.5 g/cm$^3$ to 2.0 g/cm$^3$, or from 1.6 g/cm$^3$ to 2.0 g/cm$^3$; or vice versa. For $D1$, $D2$ around 1.0 g/cm$^3$ little salt must be contained in the aqueous phase; for a density below 1.0 g/cm$^3$ an organic solvent must be added to the aqueous phase in addition; preferably the organic solvent is miscible with the aqueous phase in the amount added.

This is an embodiment of the first aspect of the invention. It may be combined with any single other embodiment or plurality of embodiments of the first aspect of the invention.

In another embodiment of the first aspect of the invention, the plastic composition, which comprises the vinyl halide polymer, may have a **DP** of about 1.7 to 1.8 $g/cm^3$, the plastic composition comprising the vinyl halide polymer being PVDC for example. In this case, it is desired to divide the plastic composition comprising the vinyl halide polymer from particles having a density of 1.7 $g/cm^3$ or less in a first step, and then from particles having a density of 1.8 $g/cm^3$ or more, or vice versa. Accordingly, either the density **D1** should be equal or less than 1.7 $g/cm^3$, for example 1.6 $g/cm^3$ or less, or 1.5 $g/cm^3$ or less, , or 1.4 $g/cm^3$ or less, and the density **D2** should be equal or more than 1.8 $g/cm^3$, for example 1.9 $g/cm^3$ or more, or about 2.0 $g/cm^3$; or vice versa. In general, a density of 0.9 $g/cm^3$ is usually not undercut, and a density of 2.0 $g/cm^3$ not surpassed. So, the density **D1** should in the range from 1.7 $g/cm^3$ to 0.9, for example from 1.7 $g/cm^3$ to 1 $g/cm^3$, or from 1.6 $g/cm^3$ to 1 $g/cm^3$, from 1.5 $g/cm^3$ to 1 $g/cm^3$, and the density **D2** should be in the range from 1.8 $g/cm^3$ to 2.0 $g/cm^3$, for example from 1.9 $g/cm^3$ to 2.0 $g/cm^3$; or vice versa. For **D1, D2** around 1.0 $g/cm^3$ little salt must contained in the aqueous phase; for a density below 1.0 $g/cm^3$ an organic solvent must be added to the aqueous phase in addition; preferably the organic solvent is miscible with the aqueous phase in the amount added.

This is an embodiment of the first aspect of the invention. It may be combined with any single other embodiment or plurality of embodiments of the first aspect of the invention.

An example of an aqueous phase of a density of 1.96 is an aqueous phase with 70 wt.% $ZnCl_2$ at 20 °C, based on the total amount of the aqueous phase. An aqueous phase with a density of 1.35 can be obtained by dissolving 35 wt.% of $CaCl_2$.

A list of aqueous phases of dissolved salt and densities thereof at 20 °C are exemplified in the following table:

| Density (@ 20 °C) | Solution of salt in an aqueous phase, value indicates wt% of salt | Density (@ 20 °C) | Solution of salt in an aqueous phase |
|---|---|---|---|
| 1.1 | 12% $CaCl_2$; 11 % $ZnCl_2$ | 1.6 | 52 % $ZnCl_2$; 55 % $K_2CO_3$ |
| 1.2 | 22% $CaCl_2$; 21 % $ZnCl_2$ | 1.7 | 57 % $ZnCl_2$ |
| 1.3 | 31 % $CaCl_2$; 31% $ZnCl_2$; 30 % $K_2CO_3$ | 1.8 | 62,5 % $ZnCl_2$ |
| 1.4 | 39 % $CaCl_2$; 39% $ZnCl_2$; 39 % $K_2CO_3$ | 1.9 | 67 % $ZnCl_2$ |
| 1.5 | 46 % $ZnCl_2$; 47 % $K_2CO_3$ | 2.0 | 71,5 % $ZnCl_2$ |

A skilled person can calculate the approximate density $D_{soln.}$ for a salt solution depending on the salt's concentration with ease and consider the maximum solubility of the specific salt in water. However, the exact density may deviate therefrom, due to certain effects when dissolving. Accordingly, the density should be tested and corrected by further addition of salt or water, or one should look into a textbook with tables regarding amounts of salt and resulting concentration.

At a temperature of 20 °C, the formula (2) is

$$D_{soln.} = \frac{mass\ (water) + mass\ (salt)}{Volume\ (water + salt)} \qquad (2)$$

The maximum concentration of a salt in water @ 20°C and at other temperatures is found in literature, e.g. the CRC Handbook of Chemistry and Physics, 95th edition (2014), Section 5-190 to 5-195. Densities of aqueous phases for some salts are tabled for different temperatures in "Perry's Chemical Engineers' Handbook", 8th ed., McGraw-Hill, 2007, cf. Chapter 2, e.g. for NaCl cf. Table 2-90 and for $ZnCl_2$ cf. Table 2-105.

This is an embodiment of the first aspect of the invention. It may be combined with any single other embodiment or plurality of embodiments of the first aspect of the invention.

The process of the invention according to the first embodiment is directed to making a plastic composition, which comprises the vinyl halide polymer, and comprises a number of steps. These steps are performed in the order indicated by the numbers, but as an option, there may exist further process steps not identified here, which are performed between any two steps described in consecutive order in the present invention and/or by consecutive numbering. The steps indicated as inventive in the first embodiment are those which are required as a minimum to conduct the process of the invention.

Moreover, the process of the invention can be conducted in batch mode or continuously, or part-part. Some equipment depends on the mode of operation. A skilled person is generally capable of selecting the right equipment depending on the mode of operation.

The term "making a plastic composition comprising a vinyl halide polymer" as used herein describes that the plastic composition, which comprises the vinyl halide polymer, is obtained by a manufacturing process. In the present case, this is not a manufacturing from monomer sources or carbon feedstock. The manufacturing of this process is a creation of plastic composition comprising vinyl halide polymer for commercial purposes from a plastic composition also comprising vinyl halide polymer, which is a feed of used stuff, or materials. Accordingly, the making of a plastic composition comprising vinyl halide polymer refers to a purification or recovery or recycling of a plastic composition comprising vinyl halide polymer from such feed of used stuff, or materials.

A particularity of the process of the invention is that the molecular weight and distribution of the vinyl halide polymer in the plastic composition does not undergo any significant changes during this process. The molecular weight, average molecular weight and molecular weight distribution of the vinyl halide polymer remains pretty much identical, or reduces by not more than approximately 10%, for example solely not more than approximately 5 % in its number averaged molecular weight, when comparing the number averaged molecular weight of the vinyl halide polymer in the plastic composition of the feed and the number averaged molecular weight of the vinyl halide polymer in the plastic composition obtained as a result of the process of the invention.

In some process or treatment steps, agitation can be used to speed up and/or assist a process step. Agitation may be made by all means and techniques known to and considered suited in the present process by a skilled person. For example, a mechanical stirrer can be used in order to stir a mixture, such as the plastic composition and the first liquid organic phase, or the feed composition of the above and the first aqueous phase. Another way instead of or in addition to stirring to accomplish agitation may be applying a stream of gas. For example, air or an inert gas or mixture of gases could be bubbled from the bottom of a vessel and through the slurry or mixture therein. Or a jet of air could be pressed through a nozzle in the vessel's wall.

In step i), several components to the process are provided:

[1] a feed composition comprising particles of a plastic composition, wherein the plastic composition comprises at least 10 wt.% of vinyl halide polymer and one or more additives, as described above.

[2] a first aqueous phase comprising water and at least one salt **S1**; wherein the salt **S1** is dissolved in the water at least partially; wherein the first aqueous phase has a density **D1**

[3] a second aqueous phase comprising water and at least one salt **S2**; wherein the salt **S2** is dissolved in the water at least partially; wherein the first aqueous phase has a density **D2**.

The second aqueous phase can be same or different from the first aqueous phase with regard to components, i.e. salt **S1** and salt **S2** can be same or different; preferably, the first and the second aqueous phase are solutions of the same salt (**S1** = **S2**), but with different concentrations, i.e. $c_{\text{first aqueous phase}}$ (**S1**) ≠ $c_{\text{second aqueous phase}}$(**S2**), with S1=S2.

An aqueous solution of a salt as in the first and second aqueous phase can be prepared with ease, by mixing and agitation, optionally at elevated temperature, e.g. 50 °C, to speed up the dissolution process.

Providing may be made by any means and techniques known to and considered suited in the present process by a skilled person. For example, providing of [1] may be a placing the feed composition in a vessel, like a beaker, a pot, a round bottom flask, a mixer, a feeder, a tank and the like. Providing of [2] and [3] can be an addition of aqueous phase to [1] in a vessel. In another setting, aqueous phase is feed to a vessel, e.g. by pouring or through a pipe, and [1] is added from top, e.g. by direct pouring or through a sluice.

In an embodiment of the process of the invention, the providing of feed composition comprises a reducing in size, e.g, a grinding, of larger pieces of the plastic composition into particles of the feed composition. The feed composition's origin can be post-consumer and post-industrial waste as already mentioned but also originate from buildings and other construction, automotive, transportation or industrial uses, as well as cut-offs from production of items related thereto. These feed compositions can be large items or parts of items. Then, the feed compositions' size can be disadvantageous to run the process of the invention. In another embodiment of the process of the invention, the providing in step i) comprises a grinding of the feed composition into smaller particles, wherein at least 75 % of the resulting particles have a size of 5 cm or less, based on the total number of the particles ground.

Preferably, at least 80, 90, 95 or 97 % of the resulting particles of feed composition, plastic composition or both have a size of about 5 cm or less. Often, they have a size of at least 0.2 cm, or at least 0.5 cm. Preferably, at least 80, 90, 95 or 97 % of the resulting particles have a size of about 4 cm or less. Often, they have a size of at least 0.2 cm, or at least 0.5 cm. Preferably, at least 80, 90, 95 or 97 % of the resulting particles have a size of about 3 cm or less. Often, they have a size of at least 0.2 cm, or at least 0.5 cm. Preferably, at least 80, 90, 95 or 97 % of the resulting particles have a size of about 2 cm or less. Often, they have a size of at least 0.2 cm, or at least 0.5 cm. Preferably, at least 80, 90, 95 or 97 % of the resulting particles of plastic composition, feed composition or both have a size of about 1 cm or less. Often, they have a size of at least 0.2 cm, or at least 0.5 cm.

This is an embodiment of the first aspect of the invention. It may be combined with any single other embodiment or plurality of embodiments of the first aspect of the invention.

In another embodiment of the process of the invention, the grinding is made using at least one of the techniques selected from universal milling, roller milling, cut milling, single shaft shredder, pulverizer and crusher machine.

This is an embodiment of the first aspect of the invention. It may be combined with any single other embodiment or plurality of embodiments of the first aspect of the invention.

In step ii), a slurry of the first aqueous phase and the feed composition is formed; the forming can be achieved by any means known to and considered suited by a skilled person, including optional agitation. In step iv), a suspension of the second aqueous phase and the first intermediate phase is formed; the forming can be achieved by any means known to and considered suited by a skilled person, including optional agitation. The forming of a slurry in step ii) can be made same or different from the forming of a suspension in step iv). For example, forming a slurry can be made by pouring the feed composition into the first aqueous phase, or in case of a continuous or semi-continuous process by combining a feed stream and a stream of the first aqueous phase. For example, forming a suspension can be made by pouring the first intermediate phase into the second aqueous phase, or in case of a continuous or semi-continuous process by combining the first intermediate phase and a stream of the second aqueous phase.

In an embodiment of the process of the invention, the forming in step ii) or step iv) or both steps is characterized by at least one of these features:

(a) a temperature of at least two selected from the first aqueous phase, the second aqueous phase, the plastic composition, the first intermediate phase, and/or the second intermediate phase, in the range from 1 to 120 °C, for example from 10 to 120°C, or 15 to 120°C, or 20 to 120 °C, or from 25 to 120 °C; or from 30 to 120°C, or from 35 to 120°C, or from 40 to 120°C; or from 50to 120°C; or from 10 to 100°C, or 15 to 100°C, or 20 to 100°C, or from to 25 to 100°C, or from 30 to 100°C, or from 40 to 100°C; or from 50 to 100°C or from 10 to 90°C, or 15 to 90°C, or 20 to 90°C, or from to 25 to 90°C, or from 30 to 90°C, or from 40 to 90°C, or from 50 to 90°C; or from 10 to 80°C, or 15 to 80°C, or 20 to 80 °C, or from to 25 to 80°C; or from 30 to 80°C, or from 40 to 80°C, or from 50 to 80°C.

(b) a contact time during the forming in the range from 1 to 120 minutes, for example from 1 to 60, or from 1 to 40, or from 1 to 30 minutes; or from 5 to 120 minutes, or from 5 to 60,5 to 40, or from 5 to 30 minutes: or from 10 to 120 minutes, or from 10 to 60,10 to 40, or from 10 to 30 minutes; or from 30 to 120 minutes, for example from 45 to 120, 60 to 120 or from 90 to 120 minutes; or from 30 to 90 minutes, for example from 45 to 90, 60 to 90;

(c) agitation of the first and/or second aqueous phase in the step of forming a slurry, and a suspension respectively, as described before.

(d) Addition of salt or water to the slurry and/or the suspension to adjust the density of the slurry and/or suspension to the desired value.

Moreover, a combination of any two or more of the above features can apply. Preferred embodiments of with combinations of the above features are: (a), (b), (a)+(b), (c), (a)+ (c), (b)+(c), (a)+(b)+(c), (d), (a)+(d), (b)+(d), (a)+(b)+(d), (c)+(d), (a)+(c)+(d), (b)+ (c)+(d), (a)+(b)+ (c)+(d).

This is an embodiment of the first aspect of the invention. It may be combined with any single other embodiment or plurality of embodiments of the first aspect of the invention.

In another embodiment, the density of the first aqueous phase is less than 1.0 g/cm$^3$, for example between 0.8 and < 1.0 g/cm$^3$. Then, the first aqueous phase may consist of water and may further comprise an organic solvent which is miscible in water and has a density of less than 1.0 g/cm$^3$. For example, acetone, ethanol and methanol could be such organic solvent.

This is an embodiment of the first aspect of the invention. It may be combined with any single other embodiment or plurality of embodiments of the first aspect of the invention.

As to the slurry, a first fraction $S_{LD}$ of particles may swim or float in the upper part of the suspension, and a second fraction $S_{HD}$ of particles may sink or float in the lower part of the suspension.

Condition A) $D1 < DP, D2 > DP$

If the density $D1$ of the first aqueous phase is less than the density $DP$ in step ii), the plastic composition including the vinyl halide polymer with density $DP$ and non-polymer particles in the slurry, such as glass, metal, sand, and those polymer particles such as crosslinked and highly filled polymers, which have a higher density than $DP$ sink down and form the first fraction $S_{HD}$, which forms a sediment. Other particles like polymer particles having a density of same or less than $D1$ of the first aqueous phase swim or float in the upper part of the slurry, which is referred to as fraction $S_{LD}$ Further elements of the slurry will remain somewhere between the upper and lower part of the slurry.

In step iii), the slurry is divided into a first intermediate phase and a second intermediate phase. The first intermediate phase has a higher content of particles of the plastic composition comprising the vinyl halide polymer than the second intermediate phase. If the density of the first intermediate phase is higher than the density $DP$ in step iii), the second intermediate phase with the swimming polymer particles can be separated from the first intermediate phase, which comprises the sunken particles of plastic composition comprising the vinyl halide polymer, by decantation or skimming of the second intermediate phase, or the first intermediate phase can be removed from the bottom through an outlet.

In step iv), some elements present in the suspension, which was formed by combining the first intermediate phase and the second aqueous phase, may have a density higher than the density of the suspension and form a fraction $F_{HD}$. These elements will sink to down in the suspension and/or propagate to the bottom part of the suspension and form a sediment. Other elements of the suspension may have a density less than the second aqueous phase forming a fraction $F_{LD}$. These elements will swim up in the suspension and/or float in the upper part of the suspension. Further elements of the suspension will remain somewhere between the upper and lower part of the slurry. In A), the particles of plastic composition comprising the vinyl halide polymer will swim and form a third aqueous phase.

In step v) , the suspension is divided into a third aqueous phase and a fourth aqueous phase. The third phase has a higher content of particles of the plastic composition comprising the vinyl halide polymer than the fourth aqueous phase. The third aqueous phase comprising the particles of plastic composition comprising the vinyl halide polymer can be separated from the fourth aqueous phase by decantation or skimming of the third aqueous phase, or the fourth aqueous phase with sunken particles can be removed from the bottom through an outlet.

Condition B) $D1 > DP$, $D2 < DP$

If the density $D1$ of the first aqueous phase is higher than the density $DP$ in step ii), non-polymer particles in the slurry, such as glass, metal, sand, and those polymer particles, which have a higher density than $DP$ sink down and form the second fraction $S_{HD}$, which forms a sediment. Other particles like the plastic composition including the vinyl halide polymer with density $DP$ swim or float in the upper part of the slurry, which upper part is referred to as fraction $S_{LD}$. Further elements of the slurry will remain somewhere between the upper and lower part of the slurry.

In step iii), the slurry is divided into a first intermediate phase and a second intermediate phase. The first intermediate phase has a higher content of particles of the plastic composition comprising the vinyl halide polymer than the second intermediate phase. If the density of the second intermediate phase is higher than the density $DP$ in step iii), the first intermediate phase with the swimming particles of plastic composition comprising the vinyl halide polymer can be separated from the second intermediate phase by decantation or skimming of the first intermediate phase, or the second intermediate phase can be removed from the bottom through an outlet.

In step iv), some elements present in the suspension, which was formed by combining the first intermediate phase and the second aqueous phase, may have a density higher than the density of the suspension and form a fraction $F_{HD}$. These elements will sink to down in the suspension and/or propagate to the bottom part of the suspension and form a sediment. Other elements of the suspension may have a density less than the second aqueous phase forming a fraction $F_{LD}$. These elements will swim up in the suspension and/or float in the upper part of the suspension. Further elements of the suspension will remain somewhere between the upper and lower part of the slurry. In B), the particles of plastic composition comprising the vinyl halide polymer will sink down and form a third aqueous phase.

In step v), the suspension is divided into a third aqueous phase and a fourth aqueous phase. The third phase has a higher content of particles of the plastic composition comprising the vinyl halide polymer than the fourth aqueous phase. The fourth aqueous phase can be separated from the third aqueous phase by decantation or skimming of the fourth aqueous phase, or the third aqueous phase with the sunken particles of plastic composition comprising the vinyl halide polymer can be removed from the bottom through an outlet.

As an optional step in both, condition A) and B), water can be removed from at least one, preferably two or more, or all phases after a step of dividing, i.e., step iii) and/or v). In principle, any means or technique known to a skilled person can be employed which he knows and considers suited therefor removing water from a heterogenous phase. For example, the phase may be treated in a centrifuge, a tumbler, a rotating tube, by air jet, vacuum, cycloning, vacuum and the like. Moreover, a combination of two or more of the just mentioned techniques and devices may be used.

This is an embodiment of the first aspect of the invention. It may be combined with any single other embodiment or plurality of embodiments of the first aspect of the invention.

In an embodiment of the process of the invention, a wetting agent may be added to the first aqueous phase, the second aqueous phase, or both. Wetting agents are well known and a skilled person can select a suited one. An example of a suited wetting agent is partially hydrolyzed polyvinyl acetate.

In an embodiment of the process of the invention, the process may comprise at least one of these steps:

vi) Removing at least some water from the third aqueous phase to recover the particles of the plastic composition comprising the vinyl halide polymer; and/or

vii) optionally washing the particles of the plastic composition comprising the vinyl halide polymer.

In step vi), water can be removed from the third aqueous phase by any means or technique known to a skilled person which he knows and considers suited therefor removing water from a heterogenous phase. For example, the phase may be treated in a centrifuge, a tumbler, a rotating tube, by air jet, vacuum, cycloning, vacuum and the like. Moreover, a combination of two or more of the just mentioned techniques and devices may be used.

Washing as in step vii) is a technique well known and can be achieved by many means, such as rinsing water over the particles etc.

In an optional step viii) a liquid organic phase may be provided, which comprises at least one organic solvent, as described above. The providing can be accomplished by any means and techniques known to and considered suited by a skilled person. For example, providing of the liquid organic phase can be a pouring, purging, dispensing, dripping.

Providing may be accomplished by any means and techniques known to and considered suited in the present process by a skilled person. For example, providing may be placing both, the plastic composition and the liquid organic phase, in a vessel, like a beaker, a pot, a round bottom flask, a mixer and the like. In principle, both components, i.e. the plastic composition and the liquid organic phase can be placed at the same time or one after another, or the first at once, and the second component in multiple portions.

In step ix), a base composition is formed from both, the liquid organic phase and whatever applies: the third aqueous phase obtained in step v), the particles of the plastic composition obtained from step vi), or those from step . Solids found in the base composition mostly dissolve. This step can be enhanced by agitation.

Agitation can be used to speed up and/or assist the dissolution in step ix). Agitation may be made by all means and techniques known to and considered suited in the present process by a skilled person. For example, a mechanical stirrer can be used in order to stir the plastic composition and the liquid organic phase during step ix). Another way to accomplish agitation may be applying a stream of gas. For example, air could be bubbled from the bottom of a vessel used in step ix) and through the mix of liquid organic phase and plastic composition. Or a jet of air, or inert gas, or a mixture of inert gases could be pressed through a nozzle in the vessel's wall.

The base composition obtained from step ix) can be homogenous and purely liquid, or heterogenous, i.e. a liquid with some undissolved yet solid remainder. Ideally, all of the solid material present has dissolved into the liquid organic phase at this stage. In case of being heterogeneous, it might be advantageous to remove any undissolved reminder from the base composition to obtain a homogenous base composition. Removal of the undissolved remainder can be accomplished by any means and techniques known to and considered suited in the present process by a skilled person. For example, by passing the base composition through a filter or a sieve, a centrifuge, cyclone, etc. For example, a 100 $\mu$m sieve or filter could be used to retain all undissolved remainder of particle size larger than 100 $\mu$m. One might also remove the undissolved remainder by decantation provided that the undissolved remainder swims on the surface or sinks to the bottom of the base composition, i.e. the density of the undissolved remainder is less or larger than the density of the base composition.

In step x), the base composition is then divided into a first composition and a second composition. The aim is to concentrate the vinyl halide polymer in one of the first or the second composition, and the further constituents in the other. For the purpose of the presentation of the invention, the composition which has the higher vinyl halide polymer content is described as the "second composition", and the composition having a lower content of vinyl halide polymer is the "first composition". The terms "lower" and "higher" in this context refer to the relative content of vinyl halide polymer when comparing the first and the second composition. For example, 60 wt.% of vinyl halide polymer in a sample is a higher content that 40 wt.% of vinyl halide polymer.

In a preferred variant of the invention, step ix) and/or step x) is performed at a temperature in the range from 20 °C to 150 °C, for example at a temperature in the range from 35 to 55°C, from 60 to 90 °C, or from 100 to 150 °C, or from 120 to 150 °C, or from 130 to 150 °C. The temperature depends on the constituents of the liquid organic phase. The temperature may be chosen not to exceed the boiling point $bp_{min}$ of the constituent in the liquid organic phase, which is lowest, amongst all the constituents composing the liquid organic phase. It is preferred to choose the temperature for step ix), and/or step x) in the range from 60 to 90 %, or from 70 to 95%, the % in all cases relative to $bp_{min}$. For example, if the liquid organic phase is composed of ethyl methyl ketone (MEK) being the constituent of the liquid organic phase having the lowest boiling point, then $bp_{min}$ is the boiling point of MEK, which is 79,6 °C. Then, at least one of steps xii) or xiii), or even both steps is preferably performed at a temperature in the range from $0,6*bp_{min}$ to $0,9*bp_{min}$, which is in the range from 47,8 and 71,6 °C.

Another, preferred variant of the invention is to perform at least one of step ix), step x) or both at a temperature above the boiling point of the liquid organic phase, and in case of a solvent mixture above the boiling point $bp_{min}$ of the

constituent to the liquid organic phase which has the lowest boiling point amongst all constituents composing the liquid phase. For example, the temperature in step ix), and/or step x) could be up to 50 °C higher than the boiling point, or up to 40, 30, 20, or 10 to 50, 15 to 50, 20 to 50, or 20 to 45, 20 to 40 °C higher than the boiling point.

In that event, on of step ix), step x) or both may be operated under pressure. For example, between 1 and 50 bars above ambient pressure, or 1 to 40, 1 to 35, 1 to 30, 1 to 25, 1 to 20, or 5 to 40, 5 to 35, 5 to 30, 5 to 25, or 10 to 40, 10 to 35, or 15 to 40, 15 to 35, or 20 to 50, 20 to 45, 20 to 40 bars above ambient pressure.

In an embodiment of the process of the invention, the dividing in step x) is performed using a technique selected from one of these: filtration, membrane filtration, deep filtration, centrifugation, decantation, rotating decanter, flotation, cycloning.

In an embodiment of the process of the invention, at least one of these features applies during dividing in step x):

a)) The second composition has a density of 1.0 g/cm$^3$ or more, for example 1.1 g/cm$^3$ or more, 1.2, 1.3, 1.4, 1.5, or 1.6 g/cm$^3$ or more;

b)) wherein the step has a throughput of at least 0.5 L/m$^2$/h/bar;

c)) the temperature of the base composition during the dividing is in the range from 10 to 150 °C, e.g. 20 to 90 °C, or 20 to 80 °C, or 20 to 50 °C;

d)) the pressure of the base composition during the dividing is in the range from 1 to 20 bar;

Or a combination of any two or more of the above.

Further, the process of the present invention may have a throughput in step x) of at least 0.5 L/m$^2$/h/bar, for example in a range from 0.5 to 100 L/m$^2$/h/bar, or from 0.5 to 70 L/m$^2$/h/bar, or from 0.5 to 50 L/m$^2$/h/bar, or from 1 to 70 L/m$^2$/h/bar, or from 1 to 50 L/m$^2$/h/bar, or from 1 to 40 L/m$^2$/h/bar, or from 1 to 30 L/m$^2$/h/bar, or from 1 to 25 L/m$^2$/h/bar, or from 1 to 20 L/m$^2$/h/bar, or from 1 to 15 L/m$^2$/h/bar, or from 1 to 10 L/m$^2$/h/bar, or from 1 to 7 L/m$^2$/h/bar, or from 1 to 5 L/m$^2$/h/bar, or from 1 to 3 L/m$^2$/h/bar. The throughput describes the quantity of the base composition in step x) per unit of time and membrane area. The throughput is measured in volume per square meters per hour per bar.

Moreover, or a combination of any two or more of the above features can apply. Preferred embodiments of with combinations of the above features are: a)), b)), a))+b)), c)), a))+c)), b))+c)), a))+b))+c)), d)), a))+d)), b))+d)), a))+b))+d)), c))+d)), a))+c))+d)), b))+c))+d)), a))+b))+c))+d)).

The process of the invention may comprise a further step:

xi) Splitting the second composition into a solid phase comprising the vinyl halide polymer and a recovered organic phase. Ideally, the vinyl halide polymer has lower content of organic phase than the recovered organic phase.

This is an embodiment of the first aspect of the invention. It may be combined with any single other embodiment or plurality of embodiments of the first aspect of the invention.

The splitting in step xi) can be achieved by a single splitting step, or by a sequence of multiple splitting steps. That is, when another splitting follows to a first splitting, and so on. In this event, it is preferred to combine all portions of vinyl halide polymer obtained in these splitting steps on the one side, and all organic phase portions to a combined recovered organic phase. The splitting in step xi) might be considered complete when about no, that is a maximum of 5 wt.%, for example 1 wt.% or less of second liquid organic phase remains with the vinyl halide polymer any more.

The splitting of step xi) can be made by any means and techniques known to and considered useful by a skilled person to be employed in the present process. For example, the liquid organic phase and the vinyl halide polymer may be separated by freeze drying or distillation of the organic phase. Other examples for splitting techniques are precipitation, centrifugation, removal of organic phase in vacuo, flash drying, fluid bed drying, and stripping (steam extraction).

This is an embodiment of the first aspect of the invention. It may be combined with any single other embodiment or plurality of embodiments of the first aspect of the invention.

The process of the invention may comprise a further step:

xii) Splitting the first composition into a solid or liquid phase comprising the additives, and a recovered organic phase via nanofiltration.

The splitting in step xii) can be achieved by a single splitting step, or by a sequence of multiple splitting steps. That is, when another splitting follows to a first splitting, and so on. In this event, it is preferred to combine all portions of additives containing phase obtained in these splitting steps on the one side, and all organic phase portions to a combined recovered organic phase.

The splitting of step xii) can be made by any means and techniques known to and considered useful by a skilled person to be employed in the present process. For example, the organic phase and the additives may be separated by freeze drying or distillation of the organic phase. For example, a membrane separation could be employed to split the first composition into additives and recovered organic solvent. A suited membrane for this purpose may be one of those having an MWCO of 1000 Da or less, for example one of those described in the Journal of Membrane Science, 602, p. 117972.

This is an embodiment of the first aspect of the invention. It may be combined with any single other embodiment or plurality of embodiments of the first aspect of the invention.

In a further embodiment of the process of the invention, at least one of these features applies for the at least partial removal of at least one organic solvent in step xi), step xii), or both steps; wherein the features and values thereof may be same or different, if applicable to both steps:

(A) The organic solvent is removed at a temperature in the range from 10 to 150 °C and at a pressure of 1 bar; for example 10 to 90 °C, or 20 to 90 °C, 30 to 90 °C, 40 to 90 °C, 50 to 90 °C, 60 to 90 °C 70 to 90 °C, or from 80°C to 90 °C, or from 100 to 150 °C, 120 to 150 °C, 130 to 150 °C, or from 110 to 140 °C, the temperatures always at 1 bar; for example 20 to 80 °C; 30 to 80 °C, 50 to 80 °C, 60 to 80 °C or 70 to 80 °C, always at 1 bar; or from 20 to 70, 30 to 70, 40 to 70, 50 to 70 or from 60 to 70 °C, always at 1 bar;

(B) The organic solvent is removed at a pressure in the range from 0.05 bar to 1 bar and a temperature in the range from 10 to 90 °C; depending on the boiling point of an organic solvent at 1 bar, which is known, a skilled person can compute the boiling temperature at a reduced pressure.

(C) Removing is performed by using a rotary kiln, fluid bed, or flash drier.

(D) The content of organic solvents in the recovered material after completion of step viii) is less than 1.0 wt.%, for example less than 0.8, 0.6, 0.4 or less than 0.2 wt.%, based on the total weight of the recovered material;

Or a combination of any two or more of the above.

Moreover, or a combination of any two or more of the above features can apply. Preferred embodiments of with combinations of the above features are: (A), (B), (A)+(B), (C), (A)+(C), (B)+(C), (A)+(B)+(C), (D), (A)+(D), (B)+(D), (A)+(B)+(D), (C)+(D), (A)+(C)+(D), (B)+(C)+(D), (A)+(B)+(C)+(D).

This is an embodiment of the first aspect of the invention. It may be combined with any single other embodiment or plurality of embodiments of the first aspect of the invention.

In an embodiment of the invention the recovered organic phase is at least partially reused after performing the process by providing the recovered organic phase again as liquid organic phase in step viii). This applies to both continuous and batch operation. For example, the liquid organic phase in step viii) comprises an amount of at least 90, or 95 Vol.% of recovered organic phase. Ideally, the liquid organic phase in step viii) is composed about fully, or 99 to 100 Vol% by recovered organic phase. This is also referred to as a "closed loop process". The Vol% in this context referring to the total amount of liquid organic phase present in step viii).

This is an embodiment of the first aspect of the invention. It may be combined with any single other embodiment or plurality of embodiments of the first aspect of the invention.

Preferably, the vinyl halide polymer made by the process of the invention is obtained in solid state. However, sometimes, this vinyl halide polymer may comprise up to 10 wt.% of one or more organic solvents in total. For example, the resulting vinyl halide polymer may comprise from 2 to 5 wt.% of organic solvents. The amount of organic solvents is based with respect to the total amount of vinyl halide polymer.

This is an embodiment of the first aspect of the invention. It may be combined with any single other embodiment or plurality of embodiments of the first aspect of the invention.

Preferably, the vinyl halide polymer made by the process according to the invention including steps viii) to x) comprises less than 10'000 ppm of additives. For example, in the range from 1'000 to 5'000 wt.% additives. Or less than 1'000 ppm of additives, for example 100 to 800 ppm, or 100 to 500 ppm, or 500 ppm or less, or 200 ppm or less, or even 100 ppm or less. Often some ppm of additives, for example 5-50 ppm, or 10 - 30 ppm remain in the vinyl halide polymer. The amount of additives always with respect to the total amount of vinyl halide polymer.

This is an embodiment of the first aspect of the invention. It may be combined with embodiment 1101 and any embodiment depending therefrom, or plurality of such embodiments.

Preferably, in the process of the invention, the liquid organic phase comprises less than 40 wt.% of water, based on the total amount of liquid organic phase, for example 30 wt.% or less, or 20 wt.% or less, or 10 wt.% or less water. Often at least a bit of water, e.g. 0.1 wt.% is present in the liquid organic phase. The amount of water in a liquid organic phase can be determined by Karl-Fischer-Titration.

This is an embodiment of the first aspect of the invention. It may be combined with embodiment 1101 and any embodiment depending therefrom, or plurality of such embodiments.

The vinyl halide polymer made by the process according to the invention and including steps viii) to x) may have at least 10 times less, for example at least 20 times less, at least 50 times less, at least 100 times less, for example from 10 to 1'000 -times, or from 10 to 100-times, or from 20 to 100-times less additives, per additive substance, than the particles of plastic composition comprising the vinyl halide polymer. The amount of additives in the vinyl halide polymer is based on the amount of vinyl halide polymer. The amount of additives in the plastic composition is given with respect to the amount of vinyl halide polymer therein.

This is an embodiment of the first aspect of the invention. It may be combined with embodiment 1101 and any embodiment depending therefrom, or plurality of such embodiments.

The vinyl halide polymer made by the process of the invention and including steps viii) to x) may have a content of less than 0.1 wt.%, for example less than 0.08, 0.06, 0.05, 0.04, 0.03, 0.02 or less than 0.01 wt.% of constituents other than vinyl halide polymer, so-called additives, the wt.-% with respect to the total amount of vinyl halide polymer and other constituents. Often a content of 99.9 wt.% vinyl halide polymer is not exceeded.

This is an embodiment of the first aspect of the invention. It may be combined with embodiment 1101 and any embodiment depending therefrom, or plurality of such embodiments.

The vinyl halide polymer made by the process of the invention and including steps viii) to x) may have a content of less than 0.1 wt.%, for example less than 0.08, 0.06, 0.05, 0.04, 0.03, 0.02 or less than 0.01 wt.% of non-polymeric constituents, the wt.% with respect to the total amount of vinyl halide polymer and non-polymeric constituents. Often a content of 99.9 wt.% vinyl halide polymer is not exceeded.

This is an embodiment of the first aspect of the invention. It may be combined with embodiment 1101 and any embodiment depending therefrom, or plurality of such embodiments.

The vinyl halide polymer made by the process of the invention and including steps viii) to x) may have a content of more than 99 wt.%, for example more than 99.2, 99.4, 99.5, 99.6, 99.7, 99.8 or even more than 99.9 wt.% of non-polymeric constituents, the wt.% with respect to the total amount of vinyl halide polymer and non-polymeric constituents. Often a content of 99.9 wt.% vinyl halide polymer is not exceeded.

This is an embodiment of the first aspect of the invention. It may be combined with embodiment 1101 and any embodiment depending therefrom, or plurality of such embodiments.

Preferably, the vinyl halide polymer made by the process of the invention and including steps viii) to x) may have at least 10 times less, for example at least 20 times less, at least 50 times less, at least 100 times less, for example from 10 to 1'000 -times, or from 10 to 100-times, or from 20 to 100-times lead than the plastic composition. The amount of lead in the vinyl halide polymer is based on the amount of vinyl halide polymer. The amount of lead in the plastic composition is given with respect to the amount of vinyl halide polymer therein. Lead content can be determined by ICP-OES, see test method's section.

Sources of lead in the vinyl halide polymer and/or the plastic composition can be for example tribasic lead sulfate, dibasic lead phosphite, dibasic lead stearate, normal lead stearate, dibasic lead phthalate, and the like, as well as combinations of two or more thereof.

Preferably, the vinyl halide polymer made by the process of the invention and including steps viii) to x) may have a content of less than 0.1 wt.%, for example less than 0.08, 0.06, 0.05, 0.04, 0.03, 0.02 or less than 0.01 wt.% of lead, the wt.% with respect to the total amount of vinyl halide polymer. Often a content of 99.9 wt.% vinyl halide polymer is not exceeded. The remainder to 100 wt.% is - besides of lead - further constituents, such as additives. Lead content can be determined by ICP-OES, see test method's section.

This is an embodiment of the first aspect of the invention. It may be combined with embodiment 1101 and any embodiment depending therefrom, or plurality of such embodiments.

Preferably, the vinyl halide polymer made by the process of the invention and including steps viii) to x) may have at least 10 times less, for example at least 20 times less, at least 50 times less, at least 100 times less, for example from 10 to 1'000 -times, or from 10 to 100-times, or from 20 to 100-times less di(2-ethylhexyl) phthalate (DEHP) than the plastic composition. The amount of DEHP in the vinyl halide polymer is based on the amount of vinyl halide polymer. The amount of DEHP in the plastic composition is given with respect to the amount of vinyl halide polymer therein. The amount of DEHP is determined by using HPLC with a mass spectrometer coupled thereto.

This is an embodiment of the first aspect of the invention. It may be combined with embodiment 1101 and any embodiment depending therefrom, or plurality of such embodiments.

Preferably, the vinyl halide polymer made by the process of the invention and including steps viii) to x) may have a content of less than 0.1 wt.%, for example less than 0.08, 0.06, 0.05, 0.04, 0.03, 0.02 or less than 0.01 wt.% of DEHP, the wt.% with respect to the total amount of vinyl halide polymer. Often a content of 99.9 wt.% vinyl halide polymer is not exceeded. The remainder to 100 wt.% is - besides of DEHP - further constituents, such as additives.

This is an embodiment of the first aspect of the invention. It may be combined with embodiment 1101 and any embodiment depending therefrom, or plurality of such embodiments.

The process of any of the preceding claims, wherein the concentration of plastic composition comprising a vinyl halide polymer in the third aqueous phase, based on the third aqueous phase, is higher than the concentration of plastic composition comprising a vinyl halide polymer in the feed composition, based on the feed composition. Preferably, the concentration of plastic composition comprising a vinyl halide polymer in the third aqueous phase is at least 2 times higher, for example at least 3 times, 4 times, 5 times higher than the concentration of plastic composition comprising vinyl halide polymer in the feed composition. Occasionally, the concentration of plastic composition comprising the vinyl halide polymer in the third aqueous phase can be up to 10 times higher.

This is an embodiment of the first aspect of the invention. It may be combined with any single other embodiment or plurality of embodiments of the first aspect of the invention.

In an embodiment of the process of the invention, at least one of the steps i) - v) is performed at a temperature in the range from 1 to 120 °C, or from 10 to 110 °C, for example 10 to 90 °C, or 15 to 90 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

Preferably, two or more, or all of the steps i) - v) are performed at a temperature in the range from 1 to 120 °C, or from 1 to 120 °C, for example 10 to 110 °C, or 10 to 90 °C, or 15 to 90 °C, or at a temperature of 20±10 °C, or 20±5 °C.

This is an embodiment of the first aspect of the invention. It may be combined with any single other embodiment or plurality of embodiments of the first aspect of the invention.

In an embodiment of the process of the invention, at least one of the steps viii) - x) is performed at a temperature in the range from 10 to 150 °C, or from 15 to 80 °C, for example 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

Preferably, two or more, or all of the steps viii) - x) are performed at a temperature in the range from 10 to 150 °C, or from 15 to 80 °C, for example 15 to 55 °C, or 15 to 30 °C, or at a temperature of 20±10 °C, or 20±5 °C.

This is an embodiment of the first aspect of the invention. It may be combined with any single other embodiment or plurality of embodiments of the first aspect of the invention.

In a further embodiment of the process of the invention, the process is designed and/or operated as a continuous process. In this case, the feed composition and the first aqueous phase in step i) are provided in form of feed streams. The two feed streams are combined in step ii) to form a stream of slurry. In step iii), the slurry stream is divided into a first intermediate phase stream and a second intermediate phase stream, wherein the first intermediate phase stream has a higher content of particles of the plastic composition comprising the vinyl halide polymer than the second intermediate phase stream. The first intermediate phase stream is then combined in step iv) with the second aqueous phase stream and forms a stream of a suspension. Similarly, the suspension stream is divided into a third aqueous phase stream and a fourth aqueous phase stream in step v), wherein the third aqueous phase stream has a higher content of particles of the plastic composition comprising the vinyl halide polymer than the fourth aqueous phase stream. A skilled person is well aware of how to implement further optional steps like step vi) and so forth into the continuous process.

This is an embodiment of the first aspect of the invention. It may be combined with any single other embodiment or plurality of embodiments of the first aspect of the invention.

In a further embodiment of this, a feed of a liquid organic phase is provided in step viii), and the particles of plastic composition comprising the vinyl halide polymer obtained in any one of step v), vi) or vii) form a base composition in step ix) with the liquid organic phase and dissolve thereby. This is also referred to as the "base stream". The base stream comprising the dissolved vinyl halide polymer is divided in step x) into a first sub-stream comprising a first composition and a second sub-stream comprising a second composition, wherein the second sub-stream has a higher content of the vinyl halide polymer than the first sub-stream. This dividing can be repeated with the second sub-stream, wherein a resulting sub$^2$-stream has an even higher content of the vinyl halide polymer etc. Subsequently, the resulting second sub-stream comprising the vinyl halide polymer can be subjected to a splitting step xi), in which a solid phase comprising the vinyl halide polymer and a recovered organic phase are obtained, wherein the vinyl halide polymer has a lower content of additives that the initial plastic composition comprising the vinyl halide polymer. Similarly, the first composition can be further split into a phase (solid or liquid) comprising the additives and a recovered organic phase. Further description regarding the dividing and the splitting steps, and the compositions obtained thereby can be transferred in analogy to the streams and products obtained in the continuous process. Similarly, the same membranes as described before can be used.

This is an embodiment of the first aspect of the invention. It may be combined with any single other embodiment or plurality of embodiments of the first aspect of the invention.

A second aspect of the invention is a plastic composition comprising a vinyl halide polymer obtainable by a process as described regarding the first aspect of the invention or one or more of the embodiments relating thereto. Features and description relating to the first aspect of the invention and its embodiments are also applicable to the second aspect.

In an embodiment to the second aspect, the plastic composition comprising the vinyl halide polymer comprises less than 0.1 wt.%, for example less than 0.08, 0.06, 0.05, 0.04, 0.03, 0.02 or less than 0.01 wt.% of constituents other than vinyl halide polymer, so-called additives, the wt.% with respect to the total amount of plastic composition. Often a content of 99.9 wt.% vinyl halide polymer is not exceeded.

A third aspect of the invention is an article comprising a plastic composition comprising a vinyl halide polymer obtainable by the process according to the first aspect of the invention or any one of its embodiments. Features and description relating to the first aspect of the invention and its embodiments are also applicable to the third aspect.

The article can be of any kind known to and considered suited by a skilled person. For example, the article may be selected from the group consisting of a fiber, a filament, a textile, a film and a formed body, such as pipe, tube, door, shutter or profile, or an object of more complex geometrical shape.

A further aspect is a method of manufacture of an article comprising the steps of providing the plastic composition comprising a vinyl halide polymer obtained by the process according to the first aspect of the invention or any of its embodiments, and forming the plastic composition comprising the vinyl halide polymer whereby the article obtained.

A fourth aspect of the invention is a use of the vinyl halide polymer in an article, wherein the vinyl halide polymer is obtained by the process according to the first aspect of the invention or any one of its embodiments. Features and description relating to the first aspect of the invention and its embodiments are also applicable to the fourth aspect.

A fifth aspect of the invention is a use of a two-step specific gravity separation with particles of a waste plastic composition comprising at least one vinyl halide polymer for increasing the concentration of the plastic composition comprising the vinyl halide polymer in a product, wherein the plastic composition comprising the vinyl halide polymer is obtained by the process according to the first aspect of the invention or any one of its embodiments. Description regarding the first aspect and the process is also applicable to the fifth aspect.

A sixth aspect of the invention is a use of a two-step specific gravity separation with particles of a waste plastic composition comprising at least one vinyl halide polymer to improve the purity of plastic composition comprising the vinyl halide polymer, wherein the plastic composition comprising the vinyl halide polymer is obtained by the process according to the first aspect of the invention or any one of its embodiments. Description regarding the first aspect and the process is also applicable to the sixth aspect.

### Figures

The invention is illustrated below by means of figures by way of example. The figures are not to scale and are not intended to limit the invention.

Fig. 1      is a schematic presentation of the process according to first aspect of the invention.

Fig. 2      is a schematic presentation of an embodiment of the first aspect of the invention including a step viii), i.e. with solvent removal

Fig. 3      is a schematic presentation of an embodiment of the process of the first aspect of the invention composed of further steps ix) to xi).

Fig. 4      is another flow chart regarding showing the concept of process according to the first aspect of the invention.

### Description of the figures

DESCRIPTION OF THE FIGURES

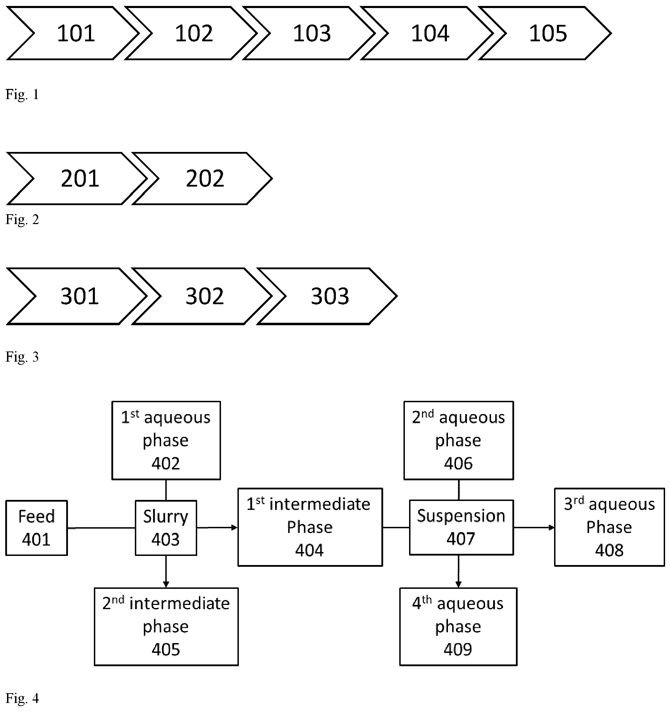

**Fig. 1** shows a schematic presentation of the process of the invention **100**. step i) **101** is a providing of [1] a feed composition, [2] a first aqueous phase and a second aqueous phase; in step ii) **102**, the first aqueous phase and the feed composition are combined to form a slurry, which is in step iii) **103** divided into a first intermediate phase and a second intermediate phase. In step iv) **104**, the first intermediate phase is combined with the second aqueous phase to give a suspension, which suspension is divided in step v) **105** into a third aqueous phase and a fourth aqueous phase. Adhering to the description above, the third aqueous phase contains more particle of the plastic composition comprising vinyl halide polymer than the fourth aqueous phase.

**Fig. 2** shows a process as in Fig. 1, including further two optional steps vi) **201** and vii) **202**. In this step vi) **201** at least some water from the third aqueous phase is removed to recover the particles of the plastic composition. In optional step vii) **202** these particles are washed to remove any residuals from the previous treatment, such as salt.

**Fig. 3** shows a process as in Fig. 1, including further three optional steps. In step viii) **301** a liquid organic phase is provided, wherein the liquid organic phase comprises at least one organic solvent. In step ix) **302** a base composition of [i] the liquid organic phase and [ii] the third aqueous phase obtained in step v) or the particles of the plastic composition obtained from step vi) is formed. Then, in step x), the base composition is divided into a first composition and a second composition; wherein the first composition has a higher content of additives than the second composition; and wherein the second composition has a higher content of the vinyl halide polymer than the first composition.

**Fig. 4** shows the concept of the invention schematically. Exemplary aim is to individualize a species of particles of a rigid PVC, which comprises additives from the prior use. This species is referred to as "target" in the following. A **feed 401** of plastic waste comprising target particles and a **first aqueous phase 402** of a density D1, which was prepared by dissolving an amount of salt in water, are combined and form a **slurry 403**. The **slurry 403** is then divided into a **first intermediate phase 404** comprising target particles and a **second intermediate phase 405** comprising other particles. The solids of the **first intermediate phase 404** are combined with a **second aqueous phase 406** of a density D2, which was prepared by dissolving an amount of salt in water, and form a **suspension 407**. The **suspension 407** is then divided into a **third aqueous phase 408** which comprises the target particles and a **fourth aqueous phase 409** comprising further particles. Optionally (not shown here), the target particles are separated from the third aqueous phase, washed with water and dried.

**Test methods**

a. Density

The density of samples of waste polymer, polymer articles and recycled polymer was determined according to DIN EN ISO 1183-1:2019, method A (immersion method). The samples were cut to a size of 10 mm x 4 mm x 30 mm. The balance employed was a Mettler Toledo XPR204 S in combination with density Kit XPR-S X SR-S. Deionized water was used as medium. All the experiments were performed twice.

The weight of the particle in air and the weight difference with the particle under water was determined and allows to calculate the density of the unswollen or swollen PVC article. A table showing the density of water at a given temperature is found in scientific textbooks and tables, e.g. the CRC Handbook of Chemistry and Physics, 95th edition (2014), section 6-7 and 6-8.

This density test is limited to samples which are dense and solid, i.e. have no closed pores. The test was used to determine the density of polymer samples, in particular PVC (waste or recycled) and plastic compositions comprising the vinyl halide polymer.

b. Molecular weight of vinyl halide polymer

The number averaged molecular weight of a sample of a vinyl halide polymer is determined using a calibrated GPC (gel permeation chromatography), running THF as mobile phase at a flux of 0.4 ml/min at 40 °C. The eluate signal was recorded using a refractive index analyzer. The technical equipment used was an EcoSEC Ambient Temperature System, equipped with one TSKgel SuperH4000 and a SUPERH3000 column with 6.0 mm Idx15 cm L, 3 $\mu$m particle size. Detector, pump oven and column oven were maintained at 40 °C.

c. Metal analysis

Metal analysis is performed by ICP-OES (Inductively coupled plasma - optical emission spectrometry). For the ICP-OES analysis, a melting procedure is performed using addition of $H_2SO_4$, $LiBO_2$ and heating up the sample. After addition of water and HCl, the sample is analyzed by ICP-OES.

d. Plasticizer analysis

Plasticizer analysis was performed in double by a Soxhlet extraction using MTBE as solvent during at least 8h (2x1.5g PVC material; $\pm$150ml methyl tert-butyl ether bp=55°C). The amount of extract (%) is determined gravimetrically. The extract is analyzed by NMR, HPLC-MS and GC-MS to identify and quantify the plasticizers.

e. Density of liquid samples

The density of a liquid can be determined using a pycnometer or a Mettler-Toledo FX-30330857 Densito handheld Density Meter. It is measured at 20 °C.

f. Weight of a polymer sample

The weight of a sample was determined using a Mettler Toledo XPR204S.

g. Water in organic phase

The amount of water in an organic phase is determined using Karl-Fisher-Titration using a Mettler Toledo Titrator Compact V10S.

h. Dipole moment

The dipole moments of solvents and other chemical compounds is found in textbooks and tables, e.g. The Handbook of Chemistry and Physics, 95th edition (2014), Section 9-51 to 9-59.

Where necessary, it was measured using a dipole meter (available from V-Tech Instruments, India).

i. Vicat temperature

Vicat B50 was performed according to EN-ISO 306:2013 using a CEAST 9000 from Instron, Norwood, MA, USA on single layered 3 mm thick test specimen of shape 10 mm x 10 mm. For each sample, 3 test specimen were tested and the average value is noted.

j. Charpy impact test

Charpy impact test was performed according to DIN EN ISO 179-1eA (type 1 specimen, edgewise-notch A) at 23 °C with temperature conditioned test specimen (80 mm length, 4 mm thick and 10 mm width) and notch 0.25/45° on 10 specimens.

k. Thermal Stability

The thermal stability was tested according to DIN 53381: 0.5 g of ground material (1.4-2 mm) are put in a test tube and a nitrogen flow of 7 liter/hour is lead over the sample and leads the released HCl due to PVC degradation to 60 ml of distilled water of which the conductivity is measured. Test is performed at 200 °C (time to reach 50 $\mu$S) using a Metrohm 895 Professional PVC Thermomat. Tests are performed twice.

1. X-ray fluorescence

Analysis of PVC content in samples (based on chlorine) was done using X-Ray fluorescence using an XRF Epsilon 4 of Malvern Panalytical, Malvern, United Kingdom. A cup of 28mm diameter is filled with ground (particle size < 2 mm) PVC waste or recyclate. The mass of the sample and the height was measured to calculate a density of the material. This data was entered into the software to obtain a semi-quantitative analysis of the metals present in the PVC waste or recyclate.

m. Analysis of liquids

Liquids were analyzed using a Brucker HPLC-MS Ultimate 3000 coupled to a MicroTOFQII-detector using 1 ml of liquid, which was dissolved in methanol/20 mM ammonium acetate prior to testing.
Fractions received from the HPLC were analyzed for chemical identity using a Bruker NMR Avance II 400 Mhz NMR. Sample preparation was a drop per fraction in 40 mg in CDCl$_3$.
Further analysis was made using a Broker FTIR Tensor 27.

**Examples**

The invention is further illustrated by examples below. The invention is not limited to the examples.

Example 1

A big bag of a waste stream comprising plastic waste (windows, doors, sealings) from deconstruction of a family home in East Belgium was obtained from a building waste recycler. By visual inspection, approximately 50 to 70 % of the volume was plastic, rest wood, metal, concrete and so on. A sample of 20 kg of the waste from the big bag was sawed to pieces of max. 10 cm in size, and further ground to smaller pieces of 1 cm in size with a Pallmann mill. These smaller pieces were poured into an aq. solution of K$_2$CO$_3$ with a K$_2$CO$_3$ content of 30 wt.% (having a density of 1.35 g/l). Those pieces found swimming were collected for further use in other plastic recycling or thermal processes. Those pieces found sinking were collected for PVC recycling. An analysis of the materials revealed this:

| Fraction | Material | Amount (estimated) |
|---|---|---|
| Swimming fraction | Many plastics like polyolefines, silicones and the like; foamed plastics; wood; paper; carton; plasticized PVC from seals. Polystyrene, PMMA | 22 wt.% of total 20 kg sample |
| Sinking fraction | Plastic parts from rigid PVC, filled plastics, glass, mineral materials like concrete, crosslinked polymers, metals; | 78 wt.% of total 20 kg sample |

The sinking fraction was separated from the aq. solution by sieving, and yielded 15.5 kg.

Then, the sinking fraction was poured into an aq. solution of $K_2CO_3$ with a $K_2CO_3$ content of 50 wt.% (having a density of 1.55 g/l). Those pieces found swimming were collected, rinsed with water and dried, to be used in PVC recycling. Those pieces found sinking were collected for further use in other plastic recycling or thermal processes. An analysis of the materials revealed this:

| Fraction | Material | Amount (estimated) |
|---|---|---|
| Swimming fraction | Rigid PVC | 14.7 kg of 15.5 kg |
| Sinking fraction | parts from filled plastics, glass, mineral materials like concrete, crosslinked polymers, metals; | 0.8 kg of 15.5 kg |

Example 2

A big bag of a waste stream comprising plastic waste (windows, doors, sealings) from deconstruction of a family home in East Belgium was obtained from a building waste recycler. By visual inspection, approximately 50 to 70 % of the volume was plastic, rest wood, metal, concrete and so on. A sample of 20 kg of the waste from the big bag was sawed to pieces of max. 10 cm in size, and further ground to smaller pieces of 1 cm in size with a Pallmann mill. These smaller pieces were poured into an aq. solution of $ZnCl_2$ with a $ZnCl_2$ content of 35 wt.% (having a density of 1.35 g/l). Those pieces found swimming were collected for further use in other plastic recycling or thermal processes. Those pieces found sinking were collected for PVC recycling. An analysis of the materials revealed this:

| Fraction | Material | Amount (estimated) |
|---|---|---|
| Swimming fraction | Many plastics like polyolefines, silicones and the like; foamed plastics; wood; paper; carton; plasticized PVC from seals. Polystyrene, PMMA | 5.8 kg of total 20 kg sample |
| Sinking fraction | Plastic parts from rigid PVC, filled plastics, glass, mineral materials like concrete, crosslinked polymers, metals; | 14.2 kg of total 20 kg sample |

The sinking fraction was separated from the aq. solution by sieving, and yielded 14.2 kg.
Then, the sinking fraction was poured into an aq. solution of $K_2CO_3$ with a $K_2CO_3$ content of 50 wt.% (having a density of 1.55 g/l). Those pieces found swimming were collected, rinsed with water and dried, to be used in PVC recycling. Those pieces found sinking were collected for further use in other plastic recycling or thermal processes. An analysis of the materials revealed this:

| Fraction | Material | Amount (estimated) |
|---|---|---|
| Swimming fraction | Rigid PVC | 6.3 kg of 14.2 kg |
| Sinking fraction | parts from filled plastics, glass, mineral materials like concrete, crosslinked polymers, metals; | 7.8 kg of 14.2 kg |

Example 3

A big bag of a waste stream comprising plastic waste (pipes) from deconstruction of a family home in East Belgium was obtained from a building waste recycler. By visual inspection, approx.. 50 to 70 % of the volume was plastic, rest wood, metal, concrete and so on. A sample of 20 kg of the waste from the big bag was sawed to pieces of max. 10 cm in size, and further ground to smaller pieces of 1 cm in size with a Pallmann mill. These smaller pieces were poured into an aq. solution of $ZnCl_2$ with a $ZnCl_2$ content of 52 wt.% (having a density of 1.6 g/l). Those pieces found swimming were collected for PVC recycling. An analysis of the materials revealed this:

| Fraction | Material | Amount (estimated) |
|---|---|---|
| Swimming fraction | Many plastics like polyolefines; foamed plastics; wood; paper; carton; Plastic parts from rigid PVC | 18 kg of total 20 kg sample (90%) |
| Sinking fraction | filled plastics, mineral materials like concrete, crosslinked polymers, metals; | 2 kg of total 20 kg sample (10%) |

The swimming fraction was separated from the aq. solution by sieving, and yielded 18 kg.

Then, the swimming fraction was poured into an aq. solution of $CaCl_2$ with a $CaCl_2$ content of 35 wt.% (having a density of 1.35 g/l). Those pieces found sinking were collected, rinsed with water and dried, to be used in PVC recycling. Those pieces found swimming were collected for further use in other plastic recycling or thermal processes. An analysis of the materials revealed this

| Fraction | Material | Amount (estimated) |
|---|---|---|
| Swimming fraction | Many plastics like polyolefines; foamed plastics; wood; paper; carton; | 4.4 kg of total 18 kg |
| Sinking fraction | Plastic parts from rigid PVC | 13.6 kg of total 18 kg |

**Reference Numerals**

| | | | |
|---|---|---|---|
| 101 | step i) | 401 | Feed |
| 102 | step ii) | 402 | First aqueous phase |
| 103 | step iii) | 403 | Slurry |
| 104 | step iv) | 404 | First intermediate phase |
| 105 | step v) | 405 | Second intermediate phase |
| 201 | step vi) | 406 | Second aqueous phase |
| 202 | step vii) | 407 | Suspension |
| 301 | step viii) | 408 | Third aqueous phase |
| 302 | step ix) | 409 | Fourth aqueous phase |
| 303 | step x) | | |

**Claims**

1. A process of making a plastic composition comprising a vinyl halide polymer comprising at least these steps:

i) Providing

[1] a feed composition comprising particles of a plastic composition, wherein the plastic composition comprises at least 10 wt.% of the vinyl halide polymer and one or more additives; and
[2] a first aqueous phase comprising water and at least one salt *S1*;

wherein the salt *S1* is dissolved in the water at least partially;
wherein the first aqueous phase has a density *D1*;

[3] a second aqueous phase comprising water and at least one salt *S2*,

wherein the salt *S2* is dissolved in the water at least partially;
wherein the second aqueous phase has a density *D2*,

ii) Forming a slurry of the first aqueous phase and the feed composition;
iii) Dividing the slurry into a first intermediate phase and a second intermediate phase, wherein the first intermediate phase has a higher content of particles of the plastic composition comprising the vinyl halide polymer than the second intermediate phase;
iv) Forming a suspension of the first intermediate phase and the second aqueous phase;
v) Dividing the suspension into a third aqueous phase and a fourth aqueous phase,

wherein the third aqueous phase has a higher content of particles of the plastic composition comprising the vinyl halide polymer than the fourth aqueous phase;
wherein the plastic composition, which comprises the vinyl halide polymer, has a density *DP*; wherein one condition selected from the following applies:

A) $D1 \leq |DP\text{-}x|$ and $D2 \geq |DP\text{+}y|$ and each x, y independent from the other $\geq 0.05$; or

B) $D1 \geq |DP\text{+}y|$ and $D2$ is $\leq |DP\text{-}x|$ and each x, y independent from the other $\geq 0.05$.

2. The process of claim 1, further comprising at least this further step:

vi) Removing at least some water from the third aqueous phase to recover the particles of the plastic composition comprising the vinyl halide polymer;
vii) optionally washing the particles of the plastic composition comprising the vinyl halide polymer.

3. The process of any of the preceding claims, wherein the concentration of plastic composition comprising a vinyl halide polymer in the third aqueous phase is higher than the concentration of plastic composition comprising a vinyl halide polymer in the feed composition.

4. The process of any of the preceding claims, wherein at least one of the steps i) - v) is performed at a temperature in the range from 1 to 120 °C.

5. The process of any of the preceding claims, wherein the salt *S1* and *S2* can be same or different.

6. The process of any one of the preceding claims, wherein the providing of the feed composition of step i) comprises grinding reducing the size of pieces of the plastic composition to particles, wherein at least 75 % of the particles have a size of 5 cm or less, based on the total number of the particles.

7. The process of claim 6, wherein the grinding is made by at least one of the techniques selected from universal milling, roller milling, single shaft shredder, pulverizer and crusher machine.

8. The process of any one of the preceding claims, wherein the forming in step ii) and/or step iv) is **characterized by** at least one of these features:

(a) a temperature of both, the plastic composition and the first aqueous phase, in the range from 1 °C to 120 °C;
(b) a contacting time in the range from 1 to 120 minutes;
(c) agitation of the slurry and or the suspension;
(d) addition of further salt or water to adjust the density of the slurry and/or suspension to the desired value;
or a combination of any two or more of the above.

9. The process of any one of the preceding claims, wherein dividing in step iii) and/or step v) is performed using a technique selected from one of these: centrifugation, decantation, rotating decantation, flotation and hydrocycloning.

10. The process of any one of the preceding claims comprising at least a further step, in which at least a part of the additives is removed from the particles of the plastic composition.

11. A plastic composition comprising a vinyl halide polymer obtainable by a process according to any of the preceding claims.

12. An article comprising a plastic composition comprising a vinyl halide polymer as in claim 11, or obtainable by the process according to any one of claims 1 to 10.

13. The article according to claim 12, wherein the article is selected from the group consisting of fiber, a filament, a textile, a film and a formed body, such as pipe, tube, door, shutter or profile, or an object of more complex geometrical shape.

14. A use of a plastic composition comprising a vinyl halide polymer in an article, wherein the plastic composition comprising the vinyl halide polymer is obtained by the process according to any one of claims 1 to 10, or according to any one of claims 11 to 13.

15. A use of a two-step specific gravity separation with particles of a plastic composition comprising at least one vinyl halide polymer for increasing the concentration of the plastic composition comprising the vinyl halide polymer in a product.

16. A use of a two-step specific gravity separation with particles of a plastic composition comprising the vinyl halide polymer to improve the purity of the plastic composition comprising the vinyl halide polymer.

17. The use of any one of claims 15 and 16, wherein the plastic composition comprising the vinyl halide polymer is post-consumer waste or construction waste.

Fig. 1

Fig. 2

Fig. 3

Fig. 4

Europäisches
Patentamt

European
Patent Office

Office européen
des brevets

# EUROPEAN SEARCH REPORT

**Application Number**

EP 23 17 2129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PONGSTABODEE ET AL: "Combination of three-stage sink-float method and selective flotation technique for separation of mixed post-consumer plastic waste", WASTE MANAGEMENT, ELSEVIER, NEW YORK, NY, US, vol. 28, no. 3, 21 December 2007 (2007-12-21), pages 475-483, XP022398380, ISSN: 0956-053X, DOI: 10.1016/J.WASMAN.2007.03.005 * the whole document * | 1-17 | INV. B29B17/02 <br><br> ADD. B29B17/04 B29K27/00 B29K27/06 |
| X | DE 41 30 645 A1 (KLOECKNER HUMBOLDT DEUTZ AG [DE]) 25 March 1993 (1993-03-25) * claims; figures; examples * | 1-17 | |
| X | US 5 738 222 A (PAGENKOPF INGEBORG [DE] ET AL) 14 April 1998 (1998-04-14) * claims; figures; examples 1,3 * | 1-17 | |
| X | WO 2007/066533 A1 (ORIENT INSTR COMP CO LTD [JP]; MASUNARI MITSUO [JP] ET AL.) 14 June 2007 (2007-06-14) * paragraph [0090] - paragraph [0116]; claims * | 11-14 | **TECHNICAL FIELDS SEARCHED (IPC)** <br><br> B29B B29K C08J |
| X | JP H11 12386 A (YAZAKI CORP) 19 January 1999 (1999-01-19) * paragraphs [0009], [0017]; claims; examples * | 11-14 | |
| X | EP 1 817 366 A1 (SOLVAY [BE]) 15 August 2007 (2007-08-15) * paragraphs [0004], [0014], [0034] - [0042]; claims * | 11-14 | |

The present search report has been drawn up for all claims

| Place of search | Date of completion of the search | Examiner |
|---|---|---|
| Munich | 6 October 2023 | Dossin, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 2129

This annex lists the patent family members relating to the patent documents cited in  the above-mentioned European search report.
The members are as contained in the European Patent Office EDP file on
The European Patent Office is in no way liable for these particulars which are merely given for the purpose of information.

06-10-2023

| Patent document cited in search report | | | Publication date | Patent family member(s) | | | Publication date |
|---|---|---|---|---|---|---|---|
| DE 4130645 | A1 | | 25-03-1993 | NONE | | | |
| US 5738222 | A | | 14-04-1998 | AT | E152637 | T1 | 15-05-1997 |
| | | | | AU | 677648 | B2 | 01-05-1997 |
| | | | | CA | 2156157 | A1 | 29-09-1994 |
| | | | | CZ | 285806 | B6 | 17-11-1999 |
| | | | | EP | 0689479 | A1 | 03-01-1996 |
| | | | | HU | 219787 | B | 28-08-2001 |
| | | | | JP | 3492691 | B2 | 03-02-2004 |
| | | | | JP | H08509650 | A | 15-10-1996 |
| | | | | PL | 308741 | A1 | 21-08-1995 |
| | | | | US | 5738222 | A | 14-04-1998 |
| | | | | WO | 9421382 | A1 | 29-09-1994 |
| WO 2007066533 | A1 | | 14-06-2007 | JP | 2009046520 | A | 05-03-2009 |
| | | | | WO | 2007066533 | A1 | 14-06-2007 |
| JP H1112386 | A | | 19-01-1999 | NONE | | | |
| EP 1817366 | A1 | | 15-08-2007 | AT | 391146 | T | 15-04-2008 |
| | | | | CN | 101061165 | A | 24-10-2007 |
| | | | | DE | 602005005852 | T2 | 14-05-2009 |
| | | | | EP | 1817366 | A1 | 15-08-2007 |
| | | | | ES | 2303281 | T3 | 01-08-2008 |
| | | | | FR | 2878250 | A1 | 26-05-2006 |
| | | | | JP | 2008520791 | A | 19-06-2008 |
| | | | | PL | 1817366 | T3 | 30-09-2008 |
| | | | | US | 2009203868 | A1 | 13-08-2009 |
| | | | | WO | 2006053907 | A1 | 26-05-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.M. HANSEN.** Hansen Solubility Parameters - A user's handbook. CRC Press, 2000
- CRC Handbook of Chemistry and Physics. 2014
- Perry's Chemical Engineers' Handbook. McGraw-Hill, 2007
- The Handbook of Chemistry and Physics. 2014